(19) Europäisches Patentamt
European Patent Office
Office européen des brevets

(11) EP 3 760 284 A1

(12) EUROPEAN PATENT APPLICATION

(43) Date of publication:
**06.01.2021 Bulletin 2021/01**

(21) Application number: **20181533.9**

(22) Date of filing: **23.06.2020**

(51) Int Cl.:
***A63B 37/00*** *(2006.01)* ***C08K 5/09*** *(2006.01)*
***C08K 5/098*** *(2006.01)* ***C08K 5/14*** *(2006.01)*
***C08L 9/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.07.2019 JP 2019126080**
**03.12.2019 JP 2019218897**
**12.06.2020 JP 2020102434**

(71) Applicant: **Sumitomo Rubber Industries, Ltd.**
**Kobe-shi, Hyogo-ken 651-0072 (JP)**

(72) Inventors:
- **HAYASHI, Kai**
  **Kobe-shi, Hyogo 651-0072 (JP)**
- **SHIGA, Kazuyoshi**
  **Kobe-shi, Hyogo 651-0072 (JP)**
- **NAGAKURA, Hikaru**
  **Kobe-shi, Hyogo 651-0072 (JP)**
- **SHIGEMITSU, Takahiro**
  **Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

# (54) GOLF BALL RUBBER COMPOSITION AND GOLF BALL USING THE SAME

(57) An object of the present invention is to provide a cured product of a golf ball rubber composition capable of imparting excellent durability to a golf ball. The present invention provides a cured product of a golf ball rubber composition, wherein the golf ball rubber composition contains (a) a base rubber, (b) an $\alpha,\beta$-unsaturated carboxylic acid having 3 to 8 carbon atoms and/or a metal salt thereof as a co-crosslinking agent, and (c) a crosslinking initiator, and wherein an effective crosslinking density DC (mmol/cm$^3$) of the cured product of the golf ball rubber composition and a tensile elastic modulus TM (MPa) between 0.05% strain and 0.25% strain of the cured product of the golf ball rubber composition satisfy a relation of TM-3.33×ln(DC)>(-0.10).

EP 3 760 284 A1

## Description

### FIELD OF THE INVENTION

The present invention relates to a golf ball and to a cured rubber composition.

### DESCRIPTION OF THE RELATED ART

As a material for forming a core of a golf ball, a rubber composition containing a base rubber, a co-crosslinking agent and a crosslinking initiator is widely used in light of its good resilience. In addition, it has been proposed to control crosslinking density of a core formed from such rubber composition.

For example, JP 2015-077405 A discloses a golf ball comprising a core and a cover composed of at least one layer, wherein the core has a cross-sectional hardness which, letting R (mm) be a radius of the core, A be a JIS-C hardness at a center of the core, B be a JIS-C hardness at a position R/3 mm from the core center, C be a JIS-C hardness at a position R/1.8 mm from the core center, D be a JIS-C hardness at a position R/1.3 mm from the core center, and E be a JIS-C hardness at a surface of the core, satisfies formulas (1) to (4) below:

$$(1)\ D-C \geq 7$$

$$(2)\ C-B \leq 7$$

$$(3)\ (D-C)-(C-B) \geq 7,$$

and

$$(4)\ E-A \geq 16.$$

Further, JP 2015-077405 A discloses that a difference between the crosslinking density of the core surface and the crosslinking density of the core center is preferably $9\times10^2$ mol/$m^3$ or more.

In addition, JP 2015-047502 A discloses a golf ball comprising a core and a cover composed of one layer or a plurality of layers, wherein the core is formed from a heat-molded product of a rubber composition containing the following components (A) to (C):

(A) a base rubber,
(B) an organic peroxide, and
(C) water and/or a metal monocarboxylate; and

wherein a product (P×E) of a difference P (mol/$m^3$) in a crosslinking density between a surface of the core and a center of the core measured based on a toluene swelling test, multiplied by a deflection E (mm) of the core when compressed under a final load of 1275 N (130 kgf) from an initial load state of 98 N (10 kgf) is $28\times10^2$ mol/$m^3$·mm or more. Further, JP 2015-047502 A discloses that a difference between the crosslinking density of the core surface and the crosslinking density of the core center is preferably $9\times10^2$ mol/$m^3$ or more.

### SUMMARY OF THE INVENTION

An object of the present invention is to provide a cured product of a golf ball rubber composition imparting excellent durability to a golf ball. Another object of the present invention is to provide a golf ball having excellent durability.

The present invention that has solved the above problem provides a cured product of a golf ball rubber composition, wherein the golf ball rubber composition contains (a) a base rubber, (b) an $\alpha,\beta$-unsaturated carboxylic acid having 3 to 8 carbon atoms and/or a metal salt thereof as a co-crosslinking agent, and (c) a crosslinking initiator, and wherein an effective crosslinking density DC (mmol/$cm^3$) of the cured product of the golf ball rubber composition and a tensile elastic modulus TM (MPa) between 0.05% strain and 0.25% strain of the cured product of the golf ball rubber composition satisfy a relation of the mathematical formula (1):

$$TM\text{-}3.33\times \ln(DC)>(-0.10)\cdots (1).$$

The present invention further provides a golf ball having a constituent member, wherein at least a part of the constituent member is formed from a cured product of a golf ball rubber composition, the golf ball rubber composition contains (a) a base rubber, (b) an $\alpha,\beta$-unsaturated carboxylic acid having 3 to 8 carbon atoms and/or a metal salt thereof as a co-crosslinking agent, and (c) a crosslinking initiator, and an effective crosslinking density DC (mmol/$cm^3$) of the cured product of the golf ball rubber composition and a tensile elastic modulus TM (MPa) between 0.05% strain and 0.25% strain of the cured product of the golf ball rubber composition satisfy a relation of the mathematical formula (1):

$$TM\text{-}3.33\times \ln(DC)>(-0.10)\cdots (1).$$

The present invention further provides a rubber composition, in particular a cured rubber composition, containing (a) a base rubber, (b) an $\alpha,\beta$-unsaturated carboxylic acid having 3 to 8 carbon atoms and/or a metal salt thereof as a co-crosslinking agent, and (c) a crosslinking initiator, and wherein an effective crosslinking density DC (mmol/$cm^3$) of the cured rubber composition and a tensile elastic modulus TM (MPa) between 0.05% strain and 0.25% strain of the cured product of the rubber composition satisfy a relation of the mathematical formula (1):

$$TM\text{-}3.33\times \ln(DC)>(-0.10)\cdots (1).$$

The rubber composition can be formed on the same basis as the golf ball rubber composition discussed herein.

According to the present invention, a cured product of a golf ball rubber composition imparting excellent durability to a golf ball is obtained. Further, according to the present invention, a golf ball having excellent durability is obtained.

## BRIEF DESCRIPTION OF THE DRAWINGS

Fig. 1 is a partially cutaway cross-sectional view of a golf ball according to one embodiment of the present invention; and

Fig. 2 is a graph showing a relation between a tensile elastic modulus TM and a natural logarithm value (ln(DC)) of an effective crosslinking density.

## DESCRIPTION OF THE PREFERRED EMBODIMENT

The present invention provides a cured product of a golf ball rubber composition, wherein the golf ball rubber composition contains (a) a base rubber, (b) an $\alpha,\beta$-unsaturated carboxylic acid having 3 to 8 carbon atoms and/or a metal salt thereof as a co-crosslinking agent, and (c) a crosslinking initiator, and wherein a natural logarithm value (ln(DC)) of an effective crosslinking density DC (mmol/$cm^3$) of the cured product of the golf ball rubber composition and a tensile elastic modulus TM (MPa) between 0.05% strain and 0.25% strain of the cured product of the golf ball rubber composition satisfy a relation of the mathematical formula (1):

$$TM\text{-}3.33\times \ln(DC)>(-0.10)\cdots (1).$$

In other words, the value (TM-3.33$\times$ln(DC)) is more than -0.10. If the tensile elastic modulus TM and the effective crosslinking density DC satisfy the above relation, the obtained golf ball has improved durability. The value (TM-3.33$\times$ln(DC)) is preferably 0 or more, more preferably 0.3 or more, and even more preferably 0.8 or more, and is preferably 5 or less, more preferably 4 or less.

The tensile elastic modulus TM is preferably 0.5 MPa or more, more preferably 1.0 MPa or more, and even more preferably 1.3 MPa or more, and is preferably 3.5 MPa or less, more preferably 2.5 MPa or less, and even more preferably 2.0 MPa or less. If the tensile elastic modulus TM is 0.5 MPa or more, the rubber composition is not excessively soft and thus the resilience is better, and if the tensile elastic modulus TM is 3.5 MPa or less, the rubber composition is not excessively hard and thus the shot feeling is better. The tensile elastic modulus is a value obtained by dividing tensile stress by tensile strain.

The effective crosslinking density DC is preferably 0.4 mmol/$cm^3$ or more, more preferably 1.0 mmol/$cm^3$ or more, and even more preferably 1.3 mmol/$cm^3$ or more, and is preferably 8.0 mmol/$cm^3$ or less, more preferably 4.0 mmol/$cm^3$ or less, and even more preferably 2.0 mmol/$cm^3$ or less. If the effective crosslinking density DC is 0.4 mmol/$cm^3$ or more, the rubber composition is not excessively soft and thus the resilience is better, and if the effective crosslinking density DC is 8.0 mmol/$cm^3$ or less, the rubber composition is not excessively hard and thus the shot feeling is better.

The slab hardness of the cured product is preferably 55 or more, more preferably 65 or more, and even more preferably 75 or more, and is preferably 90 or less, more preferably 85 or less, and even more preferably 80 or less in Shore C hardness. If the slab hardness of the cured rubber product is 55 or more in Shore C hardness, the rubber composition is not excessively soft and thus the resilience is better, and if the slab hardness of the cured rubber product is 90 or less in Shore C hardness, the rubber composition is not excessively hard and thus the shot feeling is better.

In the cured product, the blended (b) co-crosslinking agent can be divided into a graft component, a non-graft component and an unreacted component. The graft component is a co-crosslinking agent component that is grafted to (a) the base rubber. The non-graft component is a co-crosslinking agent component that is polymerized but is not grafted to (a) the base rubber. The unreacted component is a co-crosslinking agent component that does not react and remains in an original state.

In the cured product, the ratio of the graft component in the blended (b) co-crosslinking agent is preferably 0.25 or more, more preferably 0.30 or more, and even more preferably 0.35 or more, and is preferably less than 0.70, more preferably 0.69 or less, and even more preferably 0.68 or less. If the ratio of the graft component falls within the above range, the cured product has enough hardness, and the non-graft component and the unreacted component exert a reinforcing effect to the rubber so that the rubber composition has enhanced durability.

The ratio of the graft component in the co-crosslinking agent can be controlled by the type or amount of (b) the co-crosslinking agent, the type or amount of (c) the crosslinking initiator or the amount of the other component blended in the rubber composition, or the curing condition of the rubber composition.

The cured product for measuring the tensile elastic modulus, effective crosslinking density and hardness is preferably in a state that vulcanization is nearly completed (a state that the crosslinking density becomes maximum). Specifically, the cured product for measuring the tensile elastic modulus, effective crosslinking density and hardness is a cured product of the rubber composition vulcanized at a temperature in a range from one-minute half-life temperature -10 °C to one-minute half-life temperature +10 °C of the crosslinking initiator for 30 minutes or more.

Next, the materials contained in the golf ball rubber composition will be explained.

[(a) Base rubber]

As (a) the base rubber, a natural rubber and/or a synthetic rubber can be used. For example, a polybutadiene rubber, a natural rubber, a polyisoprene rubber, a styrene polybutadiene rubber, or an ethylene-propylene-diene rubber (EPDM) can be used. These rubbers may be used solely, or at least two of these rubbers may be used in combination. Among them, preferred is the polybutadiene rubber or the polyisoprene rubber, and particularly preferred is a high-cis polybutadiene and/or a high-cis polyisoprene, both having a cis-1,4 bond in an amount of 40 mass % or more, preferably 80 mass % or more, more preferably 90 mass % or more, and even more preferably 95 mass % or more in view of their superior resilience.

From the viewpoint of obtaining a core having higher resilience, the amount of the high-cis polybutadiene in the base rubber is preferably 60 mass % or more, more preferably 80 mass % or more, and even more preferably 90 mass % or more. It is also preferable that (a) the base rubber consists of the high-cis polybutadiene.

The high-cis polybutadiene preferably has a 1,2-vinyl bond in an amount of 2.0 mass % or less, more preferably 1.7 mass % or less, and even more preferably 1.5 mass % or less. If the amount of the 1,2-vinyl bond is excessively high, the resilience may be lowered.

The high-cis polybutadiene is preferably a polybutadiene synthesized using a rare earth element catalyst. When a neodymium catalyst, which employs a neodymium compound that is a lanthanum series rare earth element compound, is used, a polybutadiene rubber having a high content of a cis-1,4 bond and a low content of a 1,2-vinyl bond is obtained with excellent polymerization activity. Such a polybutadiene rubber is particularly preferred.

The high-cis polybutadiene preferably has a Mooney viscosity ($ML_1+_4$ (100°C)) of 30 or more, more preferably 32 or more, even more preferably 35 or more, and preferably has a Mooney viscosity ($ML_{1+4}$ (100°C)) of 140 or less, more preferably 120 or less, even more preferably 100 or less, and most preferably 55 or less. It is noted that the Mooney viscosity ($ML_{1+4}$ (100°C)) in the present invention is a value measured according to JIS K6300 using an L rotor under the conditions of: a preheating time of 1 minute; a rotor revolution time of 4 minutes; and a temperature of 100 °C.

The high-cis polybutadiene preferably has a molecular weight distribution Mw/Mn (Mw: weight average molecular weight, Mn: number average molecular weight) of 2.0 or more, more preferably 2.2 or more, even more preferably 2.4 or more, and most preferably 2.6 or more, and preferably has a molecular weight distribution Mw/Mn of 6.0 or less, more preferably 5.0 or less, even more preferably 4.0 or less, and most preferably 3.0 or less. If the molecular weight

distribution (Mw Mn) of the high-cis polybutadiene is excessively low, the processability deteriorates. If the molecular weight distribution (Mw/Mn) of the high-cis polybutadiene is excessively high, the resilience may be lowered. It is noted that the measurement of the molecular weight distribution is conducted by gel permeation chromatography ("HLC-8120GPC", available from Tosoh Corporation) using a differential refractometer as a detector under the conditions of column: GMHHXL (available from Tosoh Corporation), column temperature: 40 °C, and mobile phase: tetrahydrofuran, and calculated by converting based on polystyrene standard.

The rubber composition also preferably contains the polybutadiene rubber and the polyisoprene rubber as (a) the base rubber. The Mooney viscosity ($ML_1+_4$ (100°C)) of the polyisoprene rubber is preferably 55 or more, more preferably 60 or more, and even more preferably 65 or more, and is preferably 120 or less, more preferably 110 or less, and even more preferably 100 or less.

The mass ratio (polybutadiene rubber/polyisoprene rubber) of the polybutadiene rubber to the polyisoprene rubber in (a) the base rubber is preferably 1 or more, more preferably 2 or more, and even more preferably 4 or more, and is preferably 20 or less, more preferably 15 or less, and even more preferably 10 or less.

[(b) Co-crosslinking agent]

(b) The α,β-unsaturated carboxylic acid having 3 to 8 carbon atoms and/or the metal salt thereof used in the rubber composition is blended as a co-crosslinking agent in the rubber composition, and has an action of crosslinking a rubber molecule by graft polymerization to a base rubber molecular chain.

Examples of the α,β-unsaturated carboxylic acid having 3 to 8 carbon atoms include acrylic acid, methacrylic acid, fumaric acid, maleic acid and crotonic acid.

Examples of the metal ion constituting the metal salt of the α,β-unsaturated carboxylic acid having 3 to 8 carbon atoms include a monovalent metal ion such as sodium, potassium and lithium; a divalent metal ion such as magnesium, calcium, zinc, barium and cadmium; a trivalent metal ion such as aluminum; and other metal ion such as tin and zirconium. The above metal component may be used solely or as a mixture of at least two of them. Among them, the divalent metal ion such as magnesium, calcium, zinc, barium and cadmium is preferably used as the metal component. This is because if the divalent metal salt of the α,β-unsaturated carboxylic acid having 3 to 8 carbon atoms is used, a metal crosslinking easily generates between the rubber molecules. Especially, as the divalent metal salt, zinc acrylate is preferable, because use of zinc acrylate enhances the resilience of the obtained golf ball. It is noted that the α,β-unsaturated carboxylic acid having 3 to 8 carbon atoms and/or the metal salt thereof may be used solely or as a mixture of at least two of them.

The amount of (b) the α,β-unsaturated carboxylic acid having 3 to 8 carbon atoms and/or the metal salt thereof is preferably 20 parts by mass or more, more preferably 25 parts by mass or more, and even more preferably 30 parts by mass or more, and is preferably 55 parts by mass or less, more preferably 50 parts by mass or less, and even more preferably 45 parts by mass or less, with respect to 100 parts by mass of (a) the base rubber. If the amount of (b) the α,β-unsaturated carboxylic acid having 3 to 8 carbon atoms and/or the metal salt thereof is less than 20 parts by mass, the amount of (c) the crosslinking initiator which will be described later must be increased such that the cured product (e.g. core) formed from the rubber composition has an appropriate hardness, which tends to lower the resilience of the obtained golf ball. On the other hand, if the amount of the α,β-unsaturated carboxylic acid having 3 to 8 carbon atoms and/or the metal salt thereof is more than 55 parts by mass, the cured product (e.g. core) formed from the rubber composition becomes so hard that the shot feeling of the obtained golf ball may be lowered.

[(c) Crosslinking initiator]

(c) The crosslinking initiator used in the rubber composition is blended to crosslink (a) the base rubber component. As (c) the crosslinking initiator, an organic peroxide is suitable. Specific examples of the organic peroxide include dicumyl peroxide, 1,1-di(t-butylperoxy) cyclohexane, 1,1-bis(t-butylperoxy)-3,3,5-trimethylcyclohexane, 2,5-dimethyl-2,5-di(t-butylperoxy) hexane and di-t-butyl peroxide. These organic peroxides may be used solely or as a mixture of at least two of them. Among them, dicumyl peroxide is preferably used.

In the case that the rubber composition contains either or both of the following component (d) and component (e), the amount of (c) the crosslinking initiator is preferably 0.2 part by mass or more, more preferably 0.5 part by mass or more, and even more preferably 0.7 part by mass or more, and is preferably 5.0 parts by mass or less, more preferably 2.5 parts by mass or less, and even more preferably 2.0 parts by mass or less, with respect to 100 parts by mass of (a) the base rubber. If the amount of the crosslinking initiator is less than 0.2 part by mass, the cured product (e.g. core) formed from the rubber composition is so soft that the resilience of the obtained golf ball tends to be lowered, and if the amount of the crosslinking initiator is more than 5.0 parts by mass, the amount of (b) the co-crosslinking agent described above must be decreased such that the cured product (e.g. core) formed from the rubber composition has an appropriate hardness, which tends to lower the resilience or worsen the durability of the obtained golf ball.

In the case that the rubber composition contains none of the following component (d) and component (e), the

amount of (c) the crosslinking initiator is preferably 0.2 part by mass or less with respect to 100 parts by mass of (a) the base rubber. If the amount of (c) the crosslinking initiator is 0.2 part by mass or less with respect to 100 parts by mass of (a) the base rubber, the effective crosslinking density is decreased in proportion to the amount of the co-crosslinking agent, the breaking strain is increased, and the durability is enhanced.

In the case that the rubber composition contains none of the following component (d) and component (e), the one-minute half-life temperature of (c) the crosslinking initiator is preferably 130 °C or more and 170 °C or less. The one-minute half-life temperature of (c) the crosslinking initiator is more preferably 135 °C or more, and even more preferably 140 °C or more, and is more preferably 165 °C or less, and even more preferably 160 °C or less. If the one-minute half-life temperature of (c) the crosslinking initiator falls within the above range, vulcanization is performed at a low temperature and thus productivity is enhanced.

[(d) Radical scavenger]

The rubber composition also preferably contains (d) a radical scavenger. Examples of (d) the radical scavenger include (d1) a hindered phenol-based compound and (d2) a hindered amine-based compound. If the rubber composition contains the component (d), the crosslinking density is lowered while keeping the hardness of the cured product.

(d1) Hindered phenol-based compound

(d1) The hindered phenol-based compound is a compound having a hydroxyphenyl structure with a hydroxy group thereof being sterically protected by a bulky functional group. The bulky functional group preferably exists at a location adjacent to the hydroxy group. Examples of the bulky functional group include t-butyl group, and a long chain alkyl group optionally having a part of the carbon atoms thereof substituted with a sulfur atom. As (d1) the hindered phenol-based compound, a compound having a tert-butylhydroxyphenyl structure with at least one tert-butyl group is preferable, a compound having a di-tert-butylhydroxyphenyl structure with two tert-butyl groups is more preferable.

Examples of the compound having the tert-butylhydroxyphenyl structure with at least one tert-butyl group include compounds having a structure such as 3-tert-butyl-4-hydroxyphenyl or 3,5-di-tert-butyl-4-hydroxyphenyl. Among them, the compound having 3,5-di-tert-butyl-4-hydroxyphenyl structure is preferable.

Specific examples of (d1) the hindered phenol-based compound include a compound having one hydroxyphenyl structure, such as dibutylhydroxy toluene (BHT), 4,6-bis(octylthiomethyl)-o-cresol, 4,6-bis[(dodecylthio)methyl]-o-cresol, 2,4-dimethyl-6-(1-methylpentadecyl) phenol (e.g. Irganox (registered trademark) 1141 available from BASF Japan Ltd.), and octadecyl-3-(3,5-di-t-butyl-4-hydroxyphenyl) propionate (e.g. ADK STAB (registered trademark) AO-50 available from Adeka Corporation).

Other specific examples of (d1) the hindered phenol-based compound include a compound having two hydroxyphenyl structures, such as 2,2'-methylene bis(4-ethyl-6-tert-butylphenol) (e.g. YOSHINOX (registered trademark) 425 available from Mitsubishi Chemical Corporation), 2,2'-methylene bis(4-methyl-6-tertbutylphenol) (e.g. Sandant (registered trademark) 2246 available from Sanshin Chemical Industry Co., Ltd.), 4,4'-butylidene bis(3-methyl-6-tert-butylphenol) (e.g. YOSHINOX BB available from Mitsubishi Chemical Corporation), 4,4'-thiobis(3-methyl-6-tert-butylphenol) (e.g. NOCRAC (registered trademark) 300 available from Ouchi Shinko Chemical Industrial Co., Ltd.), 4,4-methylene bis(2,6-di-tertbutylphenol), 2,6-di-tert-butyl-4-({2-[(3,5-di-tert-butyl-4-hydroxyphenyl) sulfanyl] propane-2-yl} sulfanyl) phenol (probucol), and 3,9-bis[2-[3-(3-tert-butyl-4-hydroxy-5-methylphenyl) propionyloxy]-1,1-dimethylethyl]-2,4,8,10-tetraoxaspiro[5.5] undecane (e.g. ADK STAB AO-80 available from Adeka Corporation).

Other specific examples of (d1) the hindered phenol-based compound include a compound having three hydroxyphenyl structures, such as 1,3,5-tris-(3,5-di-tert-butyl-4-hydroxybenzyl)-1,3-5-triazine-2,4,6(1H,3H,5H-)-trione (e.g. ADK STAB AO-20 available from Adeka Corporation), and 1,3,5-trimethyl-2,4,6-tris(3,5-di-t-butyl-4-hydroxybenzyl) benzene (e.g. ADK STAB AO330 available from Adeka Corporation).

Other specific examples of (d1) the hindered phenol-based compound include a compound having four hydroxyphenyl structures, such as pentaerythritol tetrakis[3-(3,5-di-tert-butyl-4-hydroxyphenyl) propionate] (e.g. ADK STAB AO-60 available from Adeka Corporation).

(d1) The hindered phenol-based compound may be used solely, or two or more of them may be used in combination.

As (d1) the hindered phenol-based compound, at least one compound selected from the group consisting of dibutylhydroxy toluene, octadecyl-3-(3,5-di-tert-butyl-4-hydroxyphenyl) propionate, 4,4'-methylene bis(2,6-di-tert-butylphenol), 2,6-di-tert-butyl-4-({2-[(3,5-di-tert-butyl-4-hydroxyphenyl) sulfanyl] propane-2-yl} sulfanyl) phenol, 1,3,5-tris(3,5-di-tert-butyl-4-hydroxybenzyl)-1,3,5-triazine-2,4,6-(1H,3H,5H)-trione, and pentaerythritol tetrakis[3-(3,5-di-tert-butyl-4-hydroxyphenyl) propionate is preferable.

(d2) Hindered amine-based compound

As (d2) the hindered amine-based compound, a compound having 2,2,6,6-tetramethyl-4-piperidyl group represented by the following chemical formula (1) is preferable.

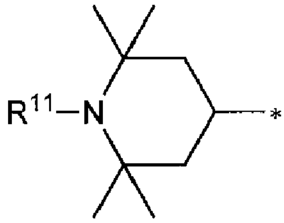

(1)

[In the formula (1), $R^{11}$ is a hydrogen atom, a hydroxy group, an alkyl group having 1 to 30 carbon atoms, a hydroxyalkyl group having 1 to 30 carbon atoms, an alkoxy group having 1 to 30 carbon atoms, a hydroxyalkoxy group having 1 to 30 carbon atoms, or an oxyradical; and * is a bonding hand.]

The hindered amine-based compound represented by the chemical formula (1) includes the hindered amine-based compound as represented by the chemical formula (2) or chemical formula (3).

The hindered amine-based compound represented by the following chemical formula (2) is a so-called N-alkyl type hindered amine-based compound or NH type hindered amine-based compound.

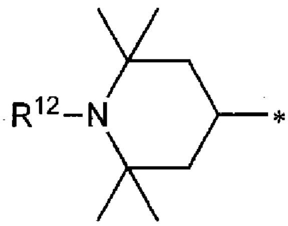

(2)

[In the formula (2), $R^{12}$ is a hydrogen atom, a hydroxy group, an alkyl group having 1 to 30 carbon atoms, a hydroxyalkyl group having 1 to 30 carbon atoms, or an oxyradical; and * is a bonding hand.]

The hindered amine-based compound represented by the following chemical formula (3) is a so-called N-alkoxy type hindered amine compound.

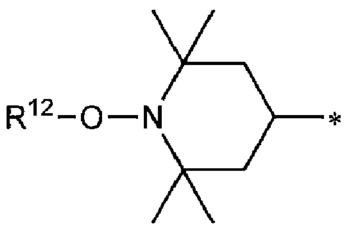

(3)

[In the chemical formula (3), $R^{12}$ is an alkyl group having 1 to 30 carbon atoms or a hydroxyalkyl group having 1 to 30 carbon atoms; and * is a bonding hand.]

Specific examples of (d2) the hindered amine-based compound include compounds represented by the chemical formulae (4) to (5).

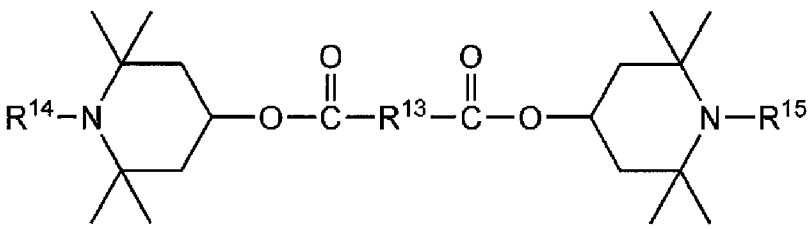

(4)

[In the chemical formula (4), $R^{13}$ is an alkylene group having 1 to 30 carbon atoms. $R^{14}$ and $R^{15}$ are each independently a hydrogen atom, a hydroxy group, an alkyl group having 1 to 30 carbon atoms, a hydroxyalkyl group having 1 to 30 carbon atoms, an alkoxy group having 1 to 30 carbon atoms, a hydroxyalkoxy group having 1 to 30 carbon atoms, or an oxyradical.]

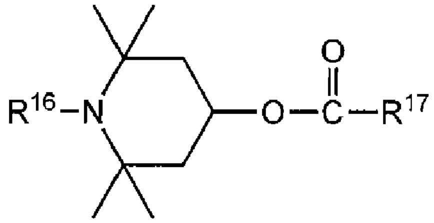

(5)

[In the chemical formula (5), $R^{16}$ is a hydrogen atom, a hydroxy group, an alkyl group having 1 to 30 carbon atoms, a hydroxyalkyl group having 1 to 30 carbon atoms, an alkoxy group having 1 to 30 carbon atoms, a hydroxyalkoxy group having 1 to 30 carbon atoms, or an oxyradical. $R^{17}$ is an alkyl group having 1 to 30 carbon atoms, or an alkenyl group having 2 to 30 carbon atoms.]

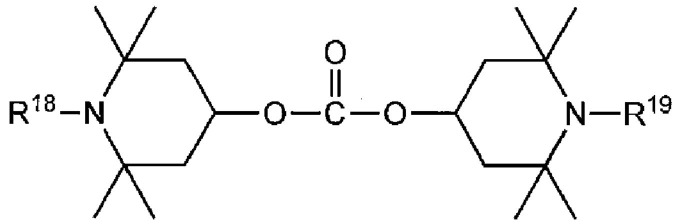

(6)

[In the chemical formula (6), $R^{18}$ and $R^{19}$ are each independently a hydrogen atom, a hydroxy group, an alkyl group having 1 to 30 carbon atoms, a hydroxyalkyl group having 1 to 30 carbon atoms, an alkoxy group having 1 to 30 carbon atoms, a hydroxyalkoxy group having 1 to 30 carbon atoms, or an oxyradical.]

Specific examples of (d2) the hindered amine-based compound include ADK STAB LA-52 (tetrakis(1,2,2,6,6-pentamethyl-4-piperidyl) butane-1,2,3,4-tetracarboxylate), ADK STAB LA-57 (tetrakis(2,2,6,6-tetramethyl-4-piperidyl) butane-1,2,3,4-tetracarboxylate), ADK STAB LA-63P, ADK STAB LA-68, ADK STAB LA-72 (bis(1,2,2,6,6-pentamethyl-4-piperidyl) sebacate, ADK STAB LA-77Y (bis(2,2,6,6-tetramethyl-4-piperidyl) sebacate, and ADK STAB LA-81 (bis(1-undecanoxy-2,2,6,6-tetramethylpiperidine-4-yl) carbonate available from Adeka Corporation.

Specific examples of (d2) the hindered amine-based compound include the following products available from BASF Japan Ltd.

1) Chimassorb (registered trademark) 2020FDL

1,6-Hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine

2) Chimassorb 944FDL

Poly[[6-[(1,1,3,3-tetramethylbutyl) amino]-1,3,5-triazine-2,4-diyl][(2,2,6,6-tetramethyl-4-piperidinyl) imino]-1,6-hexanediyl[(2,2,6,6-tetramethyl-4-piperidinyl) imino]])

3) TINUVIN (registered trademark) 622SF

Butanedioic acid, dimethylester, polymer with 4-hydroxy-2,2,6,6-tetramethyl-1-piperidine ethanol)

4) TINUVIN PA144

Bis(1,2,2,6,6-pentamethyl-4-piperidinyl)-2-butyl-2-(4-hydroxy-3,5-di-tert-butylbenzyl) propanedioate

(d2) The hindered amine-based compound may be used solely, or two or more of them may be used in combination. In addition, (d1) the hindered phenol-based compound and (d2) the hindered amine-based compound may be

used in combination.

The amount of (d) the radical scavenger is preferably 2 parts by mass or more, more preferably 3 parts by mass or more, and even more preferably 5 parts by mass or more, and is preferably 15 parts by mass or less, more preferably 12 parts by mass or less, and even more preferably 10 parts by mass or less, with respect to 100 parts by mass of (a) the base rubber. If the amount of (d) the radical scavenger falls within the above range, the effective crosslinking density is decreased for the amount of the co-crosslinking agent, the breaking strain is increased, and the durability is enhanced.

[(e) Terpene-based resin]

The rubber composition further preferably contains (e) a terpene-based resin. If the rubber composition contains the component (e), the crosslinking density is lowered while keeping the hardness of the cured product. The terpene-based resin is not particularly limited, as long as it is a polymer having a terpene compound as a constituent component. As the terpene-based resin, for example, at least one member selected from the group consisting of a terpene polymer, a terpene-phenol copolymer, a terpene-styrene copolymer, a terpene-phenol-styrene copolymer, a hydrogenated terpene-phenol copolymer, a hydrogenated terpene-styrene copolymer, and a hydrogenated terpene-phenol-styrene copolymer, is preferable.

The terpene polymer is a homopolymer obtained by polymerizing the terpene compound. The terpene compound is a hydrocarbon represented by $(C_5H_8)_n$ or an oxygen-containing derivate thereof, and is a compound having a terpene classified into monoterpene ($C_{10}H_{16}$), sesquiterpene ($C_{15}H_{24}$), diterpene ($C_{20}H_{32}$) or the like, as a basic skeleton. Examples of the terpene compound include $\alpha$-pinene, $\beta$-pinene, dipentene, limonene, myrcene, alloocimene, ocimene, $\alpha$-phellandrene, $\alpha$-terpinene, $\gamma$-terpinene, terpinolene, 1,8-cineol, 1,4-cineol, $\alpha$-terpineol, $\beta$-terpineol, and $\gamma$-terpineol. The terpene compound may be used solely, or at least two or more of them may be used in combination.

The terpene polymer is obtained, for example, by polymerizing the terpene compound. Examples of the terpene polymer include $\alpha$-pinene polymer, $\beta$-pinene polymer, limonene polymer, dipentene polymer, and $\beta$-pinene/limonene polymer.

The terpene-phenol copolymer (sometimes referred to as "terpene-phenolic resin") is, for example, a copolymer of the terpene compound and a phenol-based compound. Examples of the phenol-based compound include phenol, cresol, xylenol, catechol, resorcin, hydroquinone, and bisphenol A. As the terpene-phenol copolymer, a copolymer of the terpene compound and phenol is preferable.

The acid value of the terpene-phenol copolymer is preferably 10 mgKOH/g or more, more preferably 35 mgKOH/g or more, and even more preferably 60 mgKOH/g or more. In addition, the acid value of the terpene-phenol copolymer is preferably 300 mgKOH/g or less, more preferably 250 mgKOH/g or less, even more preferably 200 mgKOH/g or less, particularly preferably 150 mgKOH/g or less, and most preferably 90 mgKOH/g or less. It is noted that in the present invention, the acid value of the terpene-phenol copolymer is an amount of potassium hydroxide in milligrams required to neutralize the acid included in one gram of the terpene-phenol copolymer, and is a value measured by a potentiometric titration method (JIS K 0070: 1992).

The hydroxy value of the terpene-phenol copolymer is preferably 30 mgKOH/g or more, more preferably 50 mgKOH/g or more. The hydroxy value of the terpene-phenol copolymer is preferably 150 mgKOH/g or less, more preferably 100 mgKOH/g or less. It is noted that in the present specification, the hydroxy value is an amount of potassium hydroxide in milligrams required to neutralize acetic acid bonding to the hydroxy group when acetylating one gram of the resin, and is a value measured by a potentiometric titration method (JIS K 0070: 1992).

The terpene-styrene copolymer is, for example, a copolymer of the terpene compound and a styrene-based compound. Examples of the styrene-based compound include styrene, and $\alpha$-methylstyrene. As the terpene-styrene copolymer, a copolymer of the terpene compound and $\alpha$-methylstyrene is preferable.

The terpene-phenol-styrene copolymer is, for example, a copolymer of the terpene compound, the phenol-based compound and the styrene-based compound. As the terpene-phenol-styrene copolymer, a copolymer of the terpene compound, phenol and $\alpha$-methylstyrene is preferable.

The hydrogenated terpene-phenol copolymer is obtained by hydrogenating the terpene-phenol copolymer. The hydrogenated terpene-styrene copolymer is obtained by hydrogenating the terpene-styrene copolymer. The hydrogenated terpene-phenol-styrene copolymer is obtained by hydrogenating the terpene-phenol-styrene copolymer.

As (e) the terpene-based resin, at least one member selected from the group consisting of compounds having a structure represented by the following chemical formulae (7) to (10), is preferable.

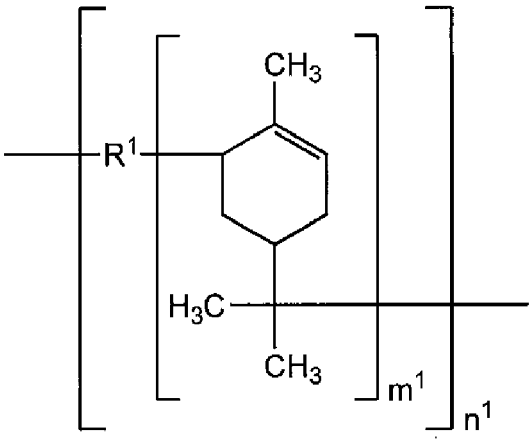

(7)

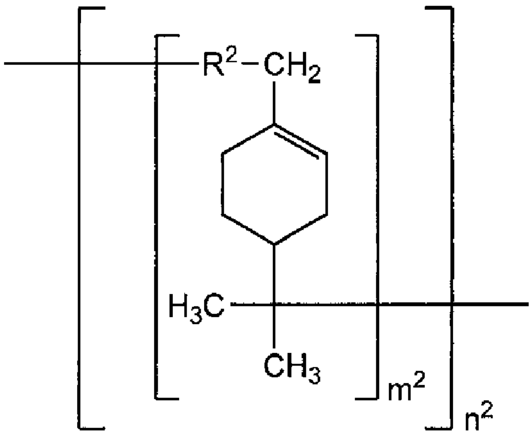

(8)

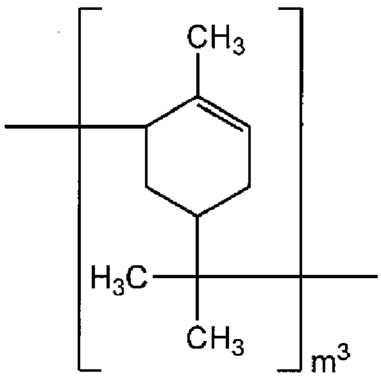

(9)

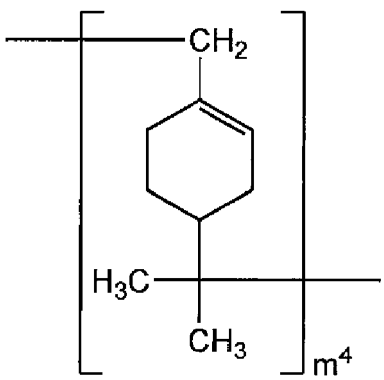

(10)

[In the chemical formulae (7) to (10), $R^1$ and $R^2$ each independently represent a divalent residue of the phenol-based

compound and/or styrene-based compound, $m^1$ to $m^4$ each independently represent a natural number of 1 to 30, and $n^1$ to $n^2$ each independently represent a natural number of 1 to 20.]

Each of the compounds having the structure represented by the chemical formulae (7) to (10) has a structure derived from pinene in the molecule.

The compound having the structure represented by the chemical formula (7) has a repeating unit consisting of a structural moiety derived from α-pinene and $R^1$ bonding to the structural moiety derived from α-pinene. $R^1$ is preferably a divalent residue where two hydrogen atoms are removed from benzene ring of a phenol-based compound and/or styrene-based compound. Examples of the compound having the structure represented by the chemical formula (7) include a copolymer of α-pinene and a phenol-based compound and/or styrene-based compound.

Examples of the phenol-based compound include phenol, cresol, xylenol, catechol, resorcin, hydroquinone, and bisphenol A. Examples of the styrene-based compound include styrene, and α-methylstyrene.

In the chemical formula (7), $m^1$ represents a polymerization degree of the structural unit derived from α-pinene, and is preferably a natural number of 1 to 30. The above $m^1$ is preferably 1 or more, more preferably 2 or more, and even more preferably 3 or more, and is preferably 30 or less, more preferably 25 or less, and even more preferably 20 or less.

In the chemical formula (7), $n^1$ represents a polymerization degree of the repeating unit consisting of the structural moiety derived from α-pinene and $R^1$ bonding to the structural moiety derived from α-pinene, and is preferably a natural number of 1 to 20. The above $n^1$ is preferably 1 or more, more preferably 2 or more, and even more preferably 3 or more, and is preferably 20 or less, more preferably 18 or less, and even more preferably 15 or less.

The compound having the structure represented by the chemical formula (8) has a repeating unit consisting of a structural moiety derived from β-pinene and $R^2$ bonding to this structural moiety in the molecule. Examples of the compound having the structure represented by the chemical formula (8) include a copolymer of β-pinene and a phenol-based compound and/or styrene-based compound. $R^2$ is a divalent residue where two hydrogen atoms are removed from benzene ring of a phenol-based compound and/or styrene-based compound.

Examples of the phenol-based compound include phenol, cresol, xylenol, catechol, resorcin, hydroquinone, and bisphenol A. Examples of the styrene-based compound include styrene, and α-methylstyrene.

In the chemical formula (8), $m^2$ represents a polymerization degree of the structural unit derived from β-pinene, and is preferably a natural number of 1 to 30. The above $m^2$ is preferably 1 or more, more preferably 2 or more, and even more preferably 3 or more, and is preferably 30 or less, more preferably 25 or less, and even more preferably 20 or less.

In the chemical formula (8), $n^2$ represents a polymerization degree of the repeating unit consisting of the structural moiety derived from β-pinene and $R^2$ bonding to this structural moiety, and is preferably a natural number of 1 to 20. The above $n^2$ is preferably 1 or more, more preferably 2 or more, and even more preferably 3 or more, and is preferably 20 or less, more preferably 18 or less, and even more preferably 15 or less.

The compound having the structure represented by the chemical formula (9) is a polymer having a structural unit derived from α-pinene, more preferably a polymer consisting of the structural unit derived from α-pinene.

In the chemical formula (9), $m^3$ represents a polymerization degree of the structural unit derived from α-pinene, and is preferably a natural number of 1 to 30. The above $m^3$ is preferably 1 or more, more preferably 2 or more, and even more preferably 3 or more, and is preferably 30 or less, more preferably 25 or less, and even more preferably 20 or less.

The compound having the structure represented by the chemical formula (10) is a β-pinene polymer having a structural unit derived from β-pinene in the molecule, more preferably a polymer consisting of the structural unit derived from β-pinene.

In the chemical formula (10), $m^4$ represents a polymerization degree of the structural unit derived from β-pinene, and is preferably a natural number of 1 to 30. The above $m^4$ is preferably 1 or more, more preferably 2 or more, and even more preferably 3 or more, and is preferably 30 or less, more preferably 25 or less, and even more preferably 20 or less.

As (e) the terpene-based resin, α-pinene-phenol copolymer, α-pinene-α-methylstyrene copolymer, α-pinene-α-methylstyrene-phenol copolymer, β-pinene-phenol copolymer, β-pinene-α-methylstyrene copolymer, β-pinene-α-methylstyrenephenol copolymer are particularly preferable. As (e) the terpene-based resin, these copolymers may be used solely, or two or more of them may be used in combination.

The softening point of (e) the terpene-based resin is preferably 60 °C or more, more preferably 80 °C or more, and even more preferably 100 °C or more, and is preferably 150 °C or less, more preferably 130 °C or less, and even more preferably 120 °C or less. If (d) the terpene-based resin having a softening point falling within the above range is used, the resin has better dispersibility in the rubber kneading. It is noted that the softening point of (e) the terpene-based resin is measured with a ring and ball type softening point measuring apparatus according to JIS K 6220-1: 2001, and is a temperature at which the ball drops.

As (e) the terpene-based resin, commercially available products can be used, and examples thereof include

Sylvares (registered trademark) TP2019 and Sylvatraxx 6720 available from Kraton Corporation; and YS RESIN PX1150N available from Yasuhara Chemical Co., Ltd.

The amount of (e) the terpene-based resin is preferably 2 parts by mass or more, more preferably 3 parts by mass or more, and even more preferably 4 parts by mass or more, and is preferably 20 parts by mass or less, more preferably 18 parts by mass or less, and even more preferably 15 parts by mass or less, with respect to 100 parts by mass of (a) the base rubber. If the amount of the component (e) is less than 2 parts by mass, the effect of adding the component (e) is small and the improvement effect on shot feeling on driver shots may not be obtained. On the other hand, if the amount of the component (e) is more than 20 parts by mass, the obtained core becomes so soft as a whole that the resilience may be lowered.

[(f) Organic sulfur compound]

The rubber composition may further contain (f) an organic sulfur compound. If (f) the organic sulfur compound is contained, the obtained core has enhanced resilience.

As (f) the organic sulfur compound, at least one compound selected from the group consisting of thiols (thiophenols, thionaphthols), polysulfides, thiurams, thiocarboxylic acids, dithiocarboxylic acids, sulfenamides, dithiocarbamates, and thiazoles, is preferable.

Examples of the thiols include thiophenols and thionaphthols. Examples of the thiophenols include thiophenol; thiophenols substituted with a fluoro group, such as 4-fluorothiophenol, 2,4-difluorothiophenol, 2,5-difluorothiophenol, 2,6-difluorothiophenol, 2,4,5-trifluorothiophenol, 2,4,5,6-tetrafluorothiophenol and pentafluorothiophenol; thiophenols substituted with a chloro group, such as 2-chlorothiophenol, 4-chlorothiophenol, 2,4-dichlorothiophenol, 2,5-dichlorothiophenol, 2,6-dichlorothiophenol, 2,4,5-trichlorothiophenol, 2,4,5,6-tetrachlorothiophenol and pentachlorothiophenol; thiophenols substituted with a bromo group, such as 4-bromothiophenol, 2,4-dibromothiophenol, 2,5-dibromothiophenol, 2,6-dibromothiophenol, 2,4,5-tribromothiophenol, 2,4,5,6-tetrabromothiophenol and pentabromothiophenol; thiophenols substituted with an iodo group, such as 4-iodothiophenol, 2,4-diiodothiophenol, 2,5-diiodothiophenol, 2,6-diiodothiophenol, 2,4,5-triiodothiophenol, 2,4,5,6-tetraiodothiophenol and pentaiodothiophenol; and metal salts thereof. As the metal salt, zinc salt is preferable.

Examples of the thionaphthols (naphthalenethiols) include 2-thionaphthol, 1-thionaphthol, 1-chloro-2-thionaphthol, 2-chloro-1-thionaphthol, 1-bromo-2-thionaphthol, 2-bromo-1-thionaphthol, 1-fluoro-2-thionaphthol, 2-fluoro-1-thionaphthol, 1-cyano-2-thionaphthol, 2-cyano-1-thionaphthol, 1-acetyl-2-thionaphthol, 2-acetyl-1-thionaphthol, and metal salts thereof. Among them, 2-thionaphthol, 1-thionaphthol, and metal salts thereof are preferable. As the metal salt, a divalent metal salt is preferable, zinc salt is more preferable. Specific examples of the metal salt include zinc salt of 1-thionaphthol and zinc salt of 2-thionaphthol.

The polysulfides are organic sulfur compounds having a polysulfide bond, and examples thereof include disulfides, trisulfides, and tetrasulfides. As the polysulfides, diphenyl polysulfides are preferable.

Examples of the diphenyl polysulfides include diphenyl disulfide; diphenyl disulfides substituted with a halogen group, such as bis(4-fluorophenyl) disulfide, bis(2,5-difluorophenyl) disulfide, bis(2,6-difluorophenyl) disulfide, bis(2,4,5-trifluorophenyl) disulfide, bis(2,4,5,6-tetrafluorophenyl) disulfide, bis(pentafluorophenyl) disulfide, bis(4-chlorophenyl) disulfide, bis(2,5-dichlorophenyl) disulfide, bis(2,6-dichlorophenyl) disulfide, bis(2,4,5-trichlorophenyl) disulfide, bis(2,4,5,6-tetrachlorophenyl) disulfide, bis(pentachlorophenyl) disulfide, bis(4-bromophenyl) disulfide, bis(2,5-dibromophenyl) disulfide, bis(2,6-dibromophenyl) disulfide, bis(2,4,5-tribromophenyl) disulfide, bis(2,4,5,6-tetrabromophenyl) disulfide, bis(pentabromophenyl) disulfide, bis(4-iodophenyl) disulfide, bis(2,5-diiodophenyl) disulfide, bis(2,6-diiodophenyl) disulfide, bis(2,4,5-triiodophenyl) disulfide, bis(2,4,5,6-tetraiodophenyl) disulfide and bis(pentaiodophenyl) disulfide; and diphenyl disulfides substituted with an alkyl group, such as bis(4-methylphenyl) disulfide, bis(2,4,5-trimethylphenyl) disulfide, bis(pentamethylphenyl) disulfide, bis(4-t-butylphenyl) disulfide, bis(2,4,5-tri-t-butylphenyl) disulfide, and bis(penta-t-butylphenyl) disulfide.

Examples of the thiurams include thiuram monosulfides such as tetramethylthiuram monosulfide; thiuram disulfides such as tetramethylthiuram disulfide, tetraethylthiuram disulfide and tetrabutylthiuram disulfide; and thiuram tetrasulfides such as dipentamethylenethiuram tetrasulfide. Examples of the thiocarboxylic acids include naphthalene thiocarboxylic acid. Examples of the dithiocarboxylic acids include naphthalene dithiocarboxylic acid. Examples of the sulfenamides include N-cyclohexyl-2-benzothiazole sulfenamide, N-oxydiethylene-2-benzothiazole sulfenamide, and N-t-butyl-2-benzothiazole sulfenamide.

As (f) the organic sulfur compound, the thiophenols and/or the metal salts thereof, the thionaphthols and/or the metal salts thereof, the diphenyl disulfides, and the thiuram disulfides are preferable, 2,4-dichlorothiophenol, 2,6-difluorothiophenol, 2,6-dichlorothiophenol, 2,6-dibromothiophenol, 2,6-diiodothiophenol, 2,4,5-trichlorothiophenol, pentachlorothiophenol, 1-thionaphthol, 2-thionaphthol, diphenyl disulfide, bis(2,6-difluorophenyl) disulfide, bis(2,6-dichlorophenyl) disulfide, bis(2,6-dibromophenyl) disulfide, bis(2,6-diiodophenyl) disulfide, and bis(pentabromophenyl) disulfide are more preferable.

(f) The organic sulfur compound may be used solely, or two or more of them may be used in combination.

The amount of (f) the organic sulfur compound is preferably 0.05 part by mass or more, more preferably 0.1 part by mass or more, and even more preferably 0.2 part by mass or more, and is preferably 5.0 parts by mass or less, more preferably 3.0 parts by mass or less, and even more preferably 2.0 parts by mass or less, with respect to 100 parts by mass of (a) the base rubber. If the amount of (f) the organic sulfur compound is less than 0.05 part by mass, the effect of adding (f) the organic sulfur compound may not be obtained, and the resilience of the golf ball may not be enhanced. In addition, if the amount of (f) the organic sulfur compound is more than 5.0 parts by mass, the obtained golf ball has a great compression deformation amount and thus the resilience thereof may be lowered.

[(g) Other component]

The golf ball rubber composition preferably further contains a metal compound. The metal compound is used as a neutralizing agent for the α,β-unsaturated carboxylic acid having 3 to 8 carbon atoms.

Examples of the metal compound include a metal hydroxide such as magnesium hydroxide, zinc hydroxide, calcium hydroxide, sodium hydroxide, lithium hydroxide, potassium hydroxide, and copper hydroxide; a metal oxide such as magnesium oxide, calcium oxide, zinc oxide, and copper oxide; and a metal carbonate such as magnesium carbonate, zinc carbonate, calcium carbonate, sodium carbonate, lithium carbonate, and potassium carbonate. As the metal compound, the divalent metal compound is preferable, the zinc compound is more preferable. This is because the divalent metal compound reacts with the α,β-unsaturated carboxylic acid having 3 to 8 carbon atoms to form a metal crosslinking. In addition, if the zinc compound is used, the obtained golf ball has better resilience.

The metal compound may be used solely, or at least two of them may be used in combination. In addition, the amount of the metal compound may be appropriately adjusted according to the desired neutralization degree of (b) the α,β-unsaturated carboxylic acid having 3 to 8 carbon atoms.

The golf ball rubber composition may further contain an additive such as a pigment, a filler for adjusting weight or the like, a peptizing agent, and a softener, where necessary.

The filler blended in the rubber composition is mainly used as a weight adjusting agent for adjusting the weight of the golf ball obtained as a final product, and may be blended where necessary. Examples of the filler include an inorganic filler such as zinc oxide, barium sulfate, calcium carbonate, magnesium oxide, tungsten powder, and molybdenum powder. As the filler, zinc oxide is particularly preferable. It is considered that zinc oxide acts as a vulcanizing aid to increase the hardness of the cured product (e.g. the core as a whole).

The amount of the filler is preferably 0.5 part by mass or more, more preferably 1 part by mass or more, and is preferably 30 parts by mass or less, more preferably 25 parts by mass or less, and even more preferably 20 parts by mass or less with respect to 100 parts by mass of (a) the base rubber. If the amount of the filler is less than 0.5 part by mass, it is difficult to adjust the weight, and if the amount of the filler is more than 30 parts by mass, the weight proportion of the rubber component is decreased and thus the resilience tends to be lowered.

The amount of the peptizing agent is preferably 0.1 part by mass or more and 5 parts by mass or less with respect to 100 parts by mass of (a) the base rubber.

As the golf ball rubber composition, the following embodiments (the first embodiment to the fifth embodiment) are preferable.

The first embodiment 1: a golf ball rubber composition containing (a) the base rubber, (b) the α,β-unsaturated carboxylic acid having 3 to 8 carbon atoms and/or the metal salt thereof as the co-crosslinking agent, (c) the crosslinking initiator, and (d) the radical scavenger.

The second embodiment: a golf ball rubber composition containing (a) the base rubber, (b) the α,β-unsaturated carboxylic acid having 3 to 8 carbon atoms and/or the metal salt thereof as the co-crosslinking agent, (c) the crosslinking initiator, and (e) the terpene-based resin.

The third embodiment: a golf ball rubber composition containing (a) the base rubber, (b) the α,β-unsaturated carboxylic acid having 3 to 8 carbon atoms and/or the metal salt thereof as the co-crosslinking agent, (c) the crosslinking initiator, (d) the radical scavenger, and (e) the terpene-based resin.

The fourth embodiment: a golf ball rubber composition containing (a) the base rubber, (b) the α,β-unsaturated carboxylic acid having 3 to 8 carbon atoms and/or the metal salt thereof as the co-crosslinking agent, and (c) the crosslinking initiator wherein an amount of (c) the crosslinking initiator is 0.2 part by mass or less with respect to 100 parts by mass of (a) the base rubber.

The fifth embodiment: a golf ball rubber composition containing (a) the base rubber, (b) the α,β-unsaturated carboxylic acid having 3 to 8 carbon atoms and/or the metal salt thereof as the co-crosslinking agent, and (c) the crosslinking initiator wherein (c) the crosslinking initiator has a one-minute half-life temperature in a range of from 130°C to 170°C.

The golf ball rubber composition according to the first embodiment preferably satisfies the mathematical formula (3).

$$0.04 \leq HF/B \leq 0.35 \cdots (3)$$

(in the mathematical formula (3),

HF = number of OH functional group included in one molecule of (d) the radical scavenger × amount (mole) of (d) the radical scavenger with respect to 100 parts by mass of (a) the base rubber,
B = amount (mole) of (b) the co-crosslinking agent with respect to 100 parts by mass of (a) the base rubber.)

The HF/B is more preferably 0.04 or more, and even more preferably 0.06 or more, and is more preferably 0.35 or less, and even more preferably 0.32 or less. If the value of the HF/B falls within the above range, the durability is better.
The HF is more preferably 0.005 or more, and even more preferably 0.007 or more, and is more preferably 0.09 or less, and even more preferably 0.085 or less. If the value of the HF falls within the above range, the durability is better.
The golf ball rubber composition according to the first embodiment preferably satisfies the mathematical formula (4).

$$3.0 \leq HF/C \leq 20 \cdots (4)$$

(in the mathematical formula (4),

HF = number of OH functional group included in one molecule of (d) the radical scavenger × amount (mole) of (d) the radical scavenger with respect to 100 parts by mass of (a) the base rubber,

C = number of -O-O-bond included in one molecule of (c) the crosslinking initiator × amount (mole) of (c) the crosslinking initiator with respect to 100 parts by mass of (a) the base rubber.)

The HF/C is more preferably 7.5 or more, and even more preferably 7.6 or more, and is more preferably 18 or less, and even more preferably 16 or less.
In the golf ball rubber composition according to the second embodiment, the blending ratio ((b) component/(e) component) of the component (b) to the component (e) is preferably 2.0 or more, more preferably 2.5 or more, and even more preferably 2.8 or more, and is preferably 15.0 or less, more preferably 12.0 or less, even more preferably 10.0 or less, and most preferably 8.0 or less in a mass ratio. If the blending ratio ((b) component/(e) component) of the component (b) to the component (e) falls within the above range, the obtained golf ball has better shot feeling on driver shots.
In the golf ball rubber composition according to the third embodiment, the HF/B is more preferably 0.03 or more, and even more preferably 0.06 or more, and is more preferably 0.15 or less, and even more preferably 0.11 or less. If the value of the HF/B falls within the above range, the durability is better.
In the golf ball rubber composition according to the third embodiment, the HF is more preferably 0.005 or more, and even more preferably 0.01 or more, and is more preferably 0.03 or less, and even more preferably 0.02 or less. If the value of the HF falls within the above range, the durability is better.
In the golf ball rubber composition according to the third embodiment, the HF/C is preferably 3.0 or more, more preferably 4.0 or more, and even more preferably 5.0 or more, and is preferably 20 or less, more preferably 18 or less, and even more preferably 16 or less.
In the golf ball rubber composition according to the third embodiment, the blending ratio ((d) component/(e) component) of the component (d) to the component (e) is preferably 0.3 or more, more preferably 0.5 or more, and even more preferably 0.8 or more, and is preferably 3.0 or less, more preferably 2.0 or less, and even more preferably 1.2 or less in a mass ratio.
In the golf ball rubber composition according to the third embodiment, the blending ratio ((b) component/(e)

component) of the component (b) to the component (e) is preferably 2.0 or more, more preferably 2.5 or more, and even more preferably 2.8 or more, and is preferably 20.0 or less, more preferably 17.0 or less, even more preferably 15.0 or less, and most preferably 13.0 or less in a mass ratio. If the blending ratio ((b) component/(e) component) of the component (b) to the component (e) falls within the above range, the obtained golf ball has better shot feeling on driver shots.

In the golf ball rubber composition according to the fourth embodiment, the amount of (c) the crosslinking initiator is preferably 0.05 part by mass or more, more preferably 0.06 part by mass or more, and even more preferably 0.07 part by mass or more, and is preferably 0.3 part by mass or less, more preferably 0.2 part by mass or less, and even more preferably 0.1 part by mass or less, with respect to 100 parts by mass of (a) the base rubber.

In the golf ball rubber composition according to the fourth embodiment, the blending ratio ((b) component/(c) component) of the component (b) to the component (c) is preferably 250 or more, more preferably 280 or more, and even more preferably 300 or more, and is preferably 500 or less, more preferably 480 or less, even more preferably 450 or less, furthermore preferably 420 or less, and most preferably 400 or less in a mass ratio.

The above cured product of the golf ball rubber composition may be used as any portion of the constituent member of the golf ball. For example, the above cured product of the golf ball rubber composition can be suitably used as a one-piece golf ball body, a core, or an intermediate layer. Among them, the above cured product of the golf ball rubber composition can be suitably used as a single layered core, or an inner core layer and/or outer core layer of a dual layered core composed of the inner core layer and the outer core layer.

[Golf ball]

The present invention also provides a golf ball having a constituent member wherein at least a part of the constituent member is formed from the above cured product of the golf ball rubber composition. In a preferable embodiment of the golf ball according to the present invention, the golf ball comprises a core and at least one cover layer covering the core wherein at least a part of the core is formed from the above cured product of the golf ball rubber composition. Next, the golf ball according to the present invention will be explained.

In the case that a part of the core is formed from the above cured product of the golf ball rubber composition, the surface of the core preferably satisfies the mathematical formula (1). Specifically, a region having a thickness of 5 mm from the core surface preferably satisfies the mathematical formula (1). It is noted that the properties of the cured product for forming the core surface can be confirmed by cutting a test piece from the core. In addition, the properties of the cured product for forming the core surface can also be confirmed by evaluating a slab prepared from the rubber composition used to form the core under same conditions as conditions when molding the core.

[Core]

The core of the golf ball according to the present invention can be obtained by mixing and kneading the above golf ball rubber composition, and molding the rubber composition in a mold. The molding conditions are not particularly limited, but the molding is generally carried out at a temperature ranging from 130 °C to 200 °C under a pressure of from 2.9 MPa to 11.8 MPa for 10 minutes to 60 minutes. For example, it is preferable that the golf ball rubber composition is heated at a temperature ranging from 130 °C to 200 °C for 10 minutes to 60 minutes.

The surface hardness (Hs) of the core is preferably 50 or more, more preferably 55 or more, and even more preferably 60 or more, and is preferably 95 or less, more preferably 90 or less, and even more preferably 85 or less in Shore C hardness. If the surface hardness (Hs) of the core is 50 or more in Shore C hardness, the core has better resilience. In addition, if the surface hardness (Hs) of the core is 95 or less in Shore C hardness, the core has further enhanced shot feeling on driver shots.

The center hardness (Ho) of the core is preferably 30 or more, more preferably 35 or more, and even more preferably 40 or more in Shore C hardness. If the center hardness (Ho) of the core is 30 or more in Shore C hardness, the core does not become excessively soft and thus has better resilience. In addition, the center hardness (Ho) of the core is preferably 70 or less, more preferably 68 or less, and even more preferably 67 or less in Shore C hardness. If the center hardness (Ho) of the core is 70 or less in Shore C hardness, the core does not become excessively hard and thus has better shot feeling.

The hardness difference (Hs-Ho) between the surface hardness (Hs) and the center hardness (Ho) of the core is preferably 5 or more, more preferably 6 or more, and even more preferably 8 or more, and is preferably 35 or less, more preferably 30 or less, and even more preferably 28 or less in Shore C hardness. If the hardness difference (Hs-Ho) between the surface hardness (Hs) and the center hardness (Ho) of the core is 5 or more in Shore C hardness, the obtained golf ball has better resilience. In addition, if the hardness difference (Hs-Ho) between the surface hardness (Hs) and the center hardness (Ho) of the core is 35 or less in Shore C hardness, the obtained golf ball has further enhanced shot feeling on driver shots.

The diameter of the core is preferably 34.8 mm or more, more preferably 36.8 mm or more, and even more

preferably 38.8 mm or more, and is preferably 42.2 mm or less, more preferably 41.8 mm or less, even more preferably 41.2 mm or less, and most preferably 40.8 mm or less. If the diameter of the core is 34.8 mm or more, the cover does not become excessively thick and thus the resilience is better. On the other hand, if the diameter of the core is 42.2 mm or less, the cover does not become excessively thin and thus functions better.

When the core has a diameter in a range of from 34.8 mm to 42.2 mm, the compression deformation amount (shrinking amount along the compression direction) of the core when applying a load from 98 N as an initial load to 1275 N as a final load to the core is preferably 2.0 mm or more, more preferably 2.3 mm or more, and even more preferably 2.5 mm or more, and is preferably 5.0 mm or less, more preferably 4.5 mm or less, and even more preferably 4.3 mm or less. If the compression deformation amount is 2.0 mm or more, the shot feeling is better, and if the compression deformation amount is 5.0 mm or less, the resilience is better.

It is preferable that the ratio of the graft component in the blended (b) co-crosslinking agent is high at least at a region near the core surface. Specifically, the ratio of the graft component in the blended (b) co-crosslinking agent in a region having a thickness of 4mm from the core surface towards the core center is preferably 0.25 or more, more preferably 0.30 or more, and even more preferably 0.35 or more, and is preferably less than 0.7, more preferably 0.69 or less, and even more preferably 0.68 or less. If the ratio of the graft component falls within the above range, the core surface has enough hardness, and the non-graft component and the unreacted component exert a reinforcing effect to the rubber so that the core has enhanced durability. It is noted that the ratio of the graft component near the core surface may be measured by using a rubber piece cut near the core surface, or by using a slab formed from the core rubber composition under same conditions as conditions for producing the core.

[Cover]

The cover of the golf ball according to the present invention is formed from a cover composition containing a resin component. Examples of the resin component include an ionomer resin, a thermoplastic polyurethane elastomer having a trade name of "Elastollan (registered trademark)" available from BASF Japan Ltd., a thermoplastic polyamide elastomer having a trade name of "Pebax (registered trademark)" available from Arkema K. K., a thermoplastic polyester elastomer having a trade name of "Hytrel (registered trademark)" available from Du Pont-Toray Co., Ltd., and a thermoplastic styrene elastomer having a trade name of "Rabalon (registered trademark)" available from Mitsubishi Chemical Corporation.

Examples of the ionomer resin include a product obtained by neutralizing at least a part of carboxyl groups in a binary copolymer composed of an olefin and an $\alpha,\beta$-unsaturated carboxylic acid having 3 to 8 carbon atoms with a metal ion; a product obtained by neutralizing at least a part of carboxyl groups in a ternary copolymer composed of an olefin, an $\alpha,\beta$-unsaturated carboxylic acid having 3 to 8 carbon atoms and an $\alpha,\beta$-unsaturated carboxylic acid ester with a metal ion; and a mixture thereof. The olefin is preferably an olefin having 2 to 8 carbon atoms. Examples of the olefin include ethylene, propylene, butene, pentene, hexene, heptene and octene, and ethylene is particularly preferred. Examples of the $\alpha,\beta$-unsaturated carboxylic acid having 3 to 8 carbon atoms include acrylic acid, methacrylic acid, fumaric acid, maleic acid and crotonic acid, and acrylic acid or methacrylic acid is particularly preferred. In addition, examples of the $\alpha,\beta$-unsaturated carboxylic acid ester include methyl ester, ethyl ester, propyl ester, n-butyl ester, isobutyl ester of acrylic acid, methacrylic acid, fumaric acid and maleic acid, and acrylic acid ester or methacrylic acid ester is particularly preferred. Among them, as the ionomer resin, a metal ion neutralized product of ethylene-(meth)acrylic acid binary copolymer or a metal ion neutralized product of ethylene-(meth)acrylic acid-(meth)acrylic acid ester ternary copolymer is preferred.

The cover composition for forming the cover of the golf ball according to the present invention preferably contains a thermoplastic polyurethane elastomer or an ionomer resin as the resin component. It is also preferred that when the ionomer resin is used, a thermoplastic styrene elastomer is used in combination. The amount of the polyurethane or ionomer resin in the resin component of the cover composition is preferably 50 mass % or more, more preferably 60 mass % or more, and even more preferably 70 mass % or more.

In addition to the resin component, the cover composition may further contain a pigment component such as a white pigment (e.g. titanium oxide), a blue pigment and a red pigment, a weight adjusting agent such as zinc oxide, calcium carbonate and barium sulfate, a dispersant, an antioxidant, an ultraviolet absorber, a light stabilizer, a fluorescent material or fluorescent brightener, as long as they do not impair the performance of the cover.

The amount of the white pigment (e.g. titanium oxide) is preferably 0.5 part or more, more preferably 1 part or more, and is preferably 10 parts or less, more preferably 8 parts or less, with respect to 100 parts by mass of the resin component constituting the cover. If the amount of the white pigment is 0.5 part by mass or more, it is possible to impart the opacity to the resultant cover. In addition, if the amount of the white pigment is more than 10 parts by mass, the durability of the resultant cover may deteriorate.

The slab hardness of the cover composition is preferably set in accordance with the desired performance of the golf ball. For example, in case of a so-called distance golf ball which focuses on a flight distance, the cover composition

preferably has a slab hardness of 50 or more, more preferably 55 or more, and even more preferably 60 or more in shore D hardness, and preferably has a slab hardness of 80 or less, more preferably 70 or less, and even more preferably 68 or less in shore D hardness. If the cover composition has a slab hardness of 50 or more, the obtained golf ball has a higher launch angle and a lower spin rate on driver shots and iron shots, and thus travels a greater distance. In addition, if the cover composition has a slab hardness of 80 or less, the obtained golf ball has better durability. Further, in case of a so-called spin golf ball which focuses on controllability, the cover composition preferably has a slab hardness of less than 50 in Shore D hardness, and preferably has a slab hardness of 20 or more, more preferably 25 or more, and even more preferably 30 or more in shore D hardness. If the cover composition has a slab hardness of less than 50 in Shore D hardness, the obtained golf ball readily stops on the green due to the high spin rate on approach shots. In addition, if the cover composition has a slab hardness of 20 or more in Shore D hardness, the abrasion resistance is enhanced. In case of a plurality of cover layers, the slab hardness of the cover composition constituting each layer may be identical or different.

Examples of the method of molding the cover of the golf ball according to the present invention include a method which comprises molding the cover composition into a hollow shell, covering the core with a plurality of the hollow shells and performing compression molding (preferably a method which comprises molding the cover composition into a hollow half-shell, covering the core with two of the half-shells and performing compression molding); and a method which comprises injection molding the cover composition directly onto the core.

When molding the cover in a compression molding method, molding of the half shell can be performed by either the compression molding method or the injection molding method, and the compression molding method is preferred. Compression molding the cover composition into a half shell can be carried out, for example, under a pressure of 1 MPa or more and 20 MPa or less at a temperature of -20 °C or more and 70 °C or less relative to the flow beginning temperature of the cover composition. By performing the molding under the above conditions, the half shell having a uniform thickness can be formed. Examples of the method for molding the cover by using the half shell include a method which comprises covering the core with two of the half shells and then performing compression molding. Compression molding half shells into the cover can be carried out, for example, under a pressure of 0.5 MPa or more and 25 MPa or less at a temperature of -20 °C or more and 70 °C or less relative to the flow beginning temperature of the cover composition. By performing the molding under the above conditions, the golf ball cover having a uniform thickness can be formed.

In the case of injection molding the cover composition into the cover, the cover composition extruded in a pellet form may be used for injection molding, or the cover materials such as the base resin components and the pigment may be dry blended, followed by directly injection molding the blended material. It is preferred to use upper and lower molds having a hemi-spherical cavity and pimples for forming the cover, wherein a part of the pimples also serves as a retractable hold pin. When molding the cover by injection molding, the hold pin is protruded to hold the core, the cover composition is charged and then cooled to obtain the cover. For example, the cover composition heated at a temperature ranging from 200 °C to 250 °C is charged into a mold held under a pressure of 9 MPa to 15 MPa for 0.5 to 5 seconds, and after cooling for 10 to 60 seconds, the mold is opened to obtain the cover.

Concave portions called "dimples" are usually formed on the surface of the cover when the cover is molded. The total number of dimples formed on the cover is preferably 200 or more and 500 or less. If the total number of dimples is less than 200, the dimple effect is hardly obtained. On the other hand, if the total number of dimples exceeds 500, the dimple effect is hardly obtained because the size of the respective dimple is small. The shape (shape in a plan view) of the dimples formed on the cover includes, without limitation, a circle; a polygonal shape such as a roughly triangular shape, a roughly quadrangular shape, a roughly pentagonal shape and a roughly hexagonal shape; and other irregular shape. These shapes may be employed solely, or at least two of them may be employed in combination.

The thickness of the cover is preferably 4.0 mm or less, more preferably 3.0 mm or less, and even more preferably 2.0 mm or less. If the cover has a thickness of 4.0 mm or less, the resultant golf ball has better resilience or shot feeling. The thickness of the cover is preferably 0.3 mm or more, more preferably 0.5 mm or more, and even more preferably 0.8 mm or more. If the cover has a thickness of less than 0.3 mm, the durability or wear resistance of the cover may be lowered. In the case that the golf ball comprises a plurality of cover layers, the total thickness of a plurality of cover layers preferably falls within the above range.

The golf ball body having the cover formed thereon is ejected from the mold, and is preferably subjected to surface treatments such as deburring, cleaning and sandblast where necessary. In addition, if desired, a paint film or a mark may be formed. The thickness of the paint film is not particularly limited, and is preferably 5 $\mu$m or more, more preferably 7 $\mu$m or more, and is preferably 50 $\mu$m or less, more preferably 40 $\mu$m or less, and even more preferably 30 $\mu$m or less. If the thickness of the paint film is less than 5 $\mu$m, the paint film is easy to wear off due to the continued use of the golf ball, and if the thickness of the paint film exceeds 50 $\mu$m, the dimple effect is reduced and thus the flight performance of the golf ball may be lowered.

[Golf ball]

The construction of the golf ball according to the present invention is not particularly limited, as long as the golf ball comprises a core and at least one cover layer covering the core. The figure is a partially cutaway cross-sectional view of a golf ball 1 according to one embodiment of the present invention. The golf ball 1 has a spherical core 2, and a cover 3 covering the spherical core 2. A plurality of dimples 31 are formed on the surface of the cover. Other portions than the dimples 31 on the surface of the golf ball 1 are lands 32. The golf ball 1 is provided with a paint layer and a mark layer on an outer side of the cover 3, but these layers are not depicted.

The core is preferably spherical. In addition, the construction of the core may be either a single layered construction or a multiple layered construction, and the single layered construction is preferable. Unlike the multiple layered core, the single layered core does not have an energy loss at the interface of the multiple layered core when being hit, and thus has better resilience. In addition, the cover has a construction composed of at least one layer, and may have either a single layered construction or a multiple layered construction composed of at least two layers. Examples of the golf ball according to the present invention include a two-piece golf ball composed of a core and a single layered cover disposed around the core, a multi-piece golf ball (including a three-piece golf ball) composed of a core and at least two cover layers disposed around the core, and a wound golf ball composed of a core, a rubber thread layer formed around the core and a cover disposed around the rubber thread layer. The present invention can be suitably applied to any one of the above golf balls.

The golf ball according to the present invention preferably has a diameter ranging from 40 mm to 45 mm. In light of satisfying the regulation of US Golf Association (USGA), the diameter is most preferably 42.67 mm or more. In light of prevention of air resistance, the diameter is more preferably 44 mm or less, and most preferably 42.80 mm or less. In addition, the golf ball according to the present invention preferably has a mass of 40 g or more and 50 g or less. In light of obtaining greater inertia, the mass is more preferably 44 g or more, and most preferably 45.00 g or more. In light of satisfying the regulation of USGA, the mass is most preferably 45.93 g or less.

When the golf ball according to the present invention has a diameter in a range of from 40 mm to 45 mm, the compression deformation amount (shrinking amount along the compression direction) of the golf ball when applying a load from an initial load of 98 N to a final load of 1275 N to the golf ball is preferably 2.0 mm or more, more preferably 2.3 mm or more, and even more preferably 2.5 mm or more, and is preferably 4.0 mm or less, more preferably 3.5 mm or less, and even more preferably 3.3 mm or less. If the compression deformation amount is 2.0 mm or more, the golf ball does not become excessively hard, and thus has better shot feeling. On the other hand, if the compression deformation amount is 4.0 mm or less, the golf ball has better resilience.

**EXAMPLES**

Next, the present invention will be described in detail by way of examples. However, the present invention is not limited to the examples described below. Various changes and modifications without departing from the spirit of the present invention are included in the scope of the present invention.

[Evaluation method]

(1) Slab hardness (rubber)

Sheets with a thickness of about 2 mm were produced by pressing the rubber composition at a temperature of 170 °C for 30 minutes. The sheets were stored at a temperature of 23 °C for two weeks. At least three of these sheets were stacked on one another so as not to be affected by the measuring substrate on which the sheets were placed, and the hardness of the stack was measured with an automatic hardness tester (Digitest II, available from Bareiss company) using a testing device of "Shore C".

(2) Effective crosslinking density (mmol/$cm^3$)

The effective crosslinking density of the golf ball rubber cured product is calculated based on a swelling measurement of a slab sample of the cured rubber product. The golf ball rubber composition was kneaded with a kneading roll and heat-treated at a temperature of 170 °C for 30 minutes to produce a slab with a thickness of 0.5 mm, a length of 12 cm and a width of 14 cm. From this slab, a slab with a thickness of 0.5 mm and a size of 2 cm × 2 cm was cut off to be used as a test slab sample.

The swelling measurement was conducted by immersing the obtained slab sample in toluene (molecular weight: 92 mol/g) at a temperature of 40 °C for 24 hours. The masses of the slab before and after the swelling (23 °C) were measured, and the effective crosslinking density was calculated using the following Flory-Rehner formula.

$$v(mmol/cm^3) = \frac{V_R + ln(1 - V_R) + \mu V_R^2}{-V_0\left(V_R^{1/3} - \frac{V_R}{2}\right)} \times 10^3$$

$v$: effective crosslinking density
$V_0$: molar volume of solvent (toluene) (108.15 $cm^3$/mol)
$\mu$: interaction constant of base rubber and solvent (toluene) (0.49)

$$V_R = \frac{V_{BR}}{V_{BR} + V_T}$$

$$V_{BR} = \frac{W_F v_F}{\rho}$$

$$V_T = \frac{W_S - W_F}{\rho_T}$$

$V_{BR}$: volume of base rubber in rubber composition
$V_T$: volume of absorbed toluene by swelling
$W_F$: mass of sample before swelling
$W_S$: mass of sample after swelling
$V_F$: mass proportion of base rubber in rubber composition
$\rho$: density of base rubber
$\rho_T$: density of toluene (37 °C) (0.8507g/$cm^3$)

(3) Tensile test

The tensile test of the cured rubber product was measured based on JIS K6254 (2016). Specifically, the rubber composition was kneaded with a kneading roll, and heat-treated at a temperature of 170 °C for 30 minutes, to produce a slab having a thickness of 2.0 mm. Two test pieces were punched from the slab, and stored at a temperature of 23 °C for two weeks. The shape of the test piece was a strip shape No. 4 (width: 15 mm, total length: 100 mm, thickness: 2.0 mm, distance between marked lines: 20 mm).

The tensile test was performed with a precision universal tester (AUTOGRAPH (registered trademark) AG-X plus available from Shimadzu Corporation). Testing temperature was 23 °C, interval between grippers was 60 mm, and moving speed of the gripper was 50 mm/min. In the tensile test, the test piece was elongated until the test piece was broken, tensile stress at each elongation was recorded, and tensile elastic modulus was calculated according to the following formula.

$$\text{Tensile elastic modulus} = (\sigma_{0.25}-\sigma_{0.05})/(0.0025-0.0005)$$

$\sigma_{0.25}$: tensile stress at 0.25% elongation
$\sigma_{0\cdot05}$: tensile stress at 0.05% elongation

(4) Core hardness

The hardness measured at the surface of the core was adopted as the surface hardness of the core. In addition, the core was cut into two hemispheres to obtain a cut plane, and the hardness measured at the central point of the cut plane was adopted as the center hardness of the core. The hardness was measured with an automatic hardness tester (Digitest II, available from Bareiss company) using a testing device of "Shore C".

(5) Compression deformation amount (mm)

The deformation amount along the compression direction of the core or golf ball (shrinking amount along the compression direction of the core or golf ball), when applying a load from an initial load of 98 N to a final load of 1275 N to the core or golf ball, was measured.

(6) Slab hardness (cover composition)

Sheets with a thickness of about 2 mm were produced by injection molding the cover composition. The sheets were stored at 23 °C for two weeks. At least three of these sheets were stacked on one another so as not to be affected by the measuring substrate on which the sheets were placed, and the hardness of the stack was measured with an automatic hardness tester (Digitest II, available from Bareiss company) using a testing device of "Shore D".

(7) Durability

A W #1 driver provided with a metal head (XXIO S, loft angel: 11°, available from Sumitomo Rubber Industries, Ltd.) was installed on a swing robot M/C available from Golf Laboratories, Inc. The golf ball was hit repeatedly at a head speed of 45 m/sec until a crack occurred, and the hitting number when the crack occurred was counted. It is noted that the measurement was conducted using twelve samples for each golf ball, and the average value thereof was adopted as the hitting number for that golf ball. It is noted that the hitting number of the golf ball No. 1 was defined as 100, and the durability of each golf ball was represented by converting the hitting number of each golf ball into this index.

(8) Ratio of graft component, non-graft component and unreacted component in co-crosslinking agent component

a. Elution test

(i) The rubber composition was kneaded with a kneading roll, and heat-treated at a temperature of 170 °C for 30 minutes, to produce a crosslinked rubber slab having a thickness of 0.5 mm. A rubber piece having a width of 10 mm and a length of 50 mm was cut from the slab, and this rubber piece was used as the test piece. The mass (Wa) of the test piece was measured.
(ii) The test piece was added in a Soxhlet extractor, and 100 mL of a mixed solution of 150 mL acetone and 50 mL hydrochloric acid (6 mol/L) was used as a solvent and refluxed at a temperature of 60 °C for 96 hours.
(iii) After the test piece was washed with acetone, elution was performed at a temperature of 170 °C for 4 hours using a rapid automatic extracting apparatus (Soxtherm available from Gerhardt) and using acetone as a solvent.
(iv) Elution was performed at a temperature of 270 °C for 4 hours using a rapid automatic extracting apparatus (Soxtherm available from Gerhardt) and using methanol as a solvent.
(v) The test piece was air-dried for 60 minutes in a draft.
(vi) The test piece was charged in a vacuum oven, and vacuum (degassed) dried at a temperature of 50 °C for 120 minutes.
(vii) The mass (Wb) of the dried test piece was measured. It is noted that the mass (Wb) is a mass excluding a mass of eluted components. The eluted components are metal component in the graft component; the non-graft component; the unreacted component; zinc oxide; zinc stearate; terpene phenol; and so on.

b. FT-IR (Fourier transform infrared spectrophotometer) measurement

(i) The rubber composition was kneaded with a kneading roll, and heat-treated at a temperature of 170 °C for 30 minutes, to produce a crosslinked rubber slab having a thickness of 2.0 mm. An appropriate amount of a crosslinked rubber piece was cut from the slab, and absorption spectrum of this rubber piece was measured with FT-IR.
(ii) The ratio (I (BR)/I (M)) of the intensity of the peak (911$cm^{-1}$) derived from a vinyl group in the polybutadiene rubber (I (BR)) to the intensity of the peak (827$cm^{-1}$) derived from a vinyl group in the co-crosslinking agent (I (M)) was calculated.

c. Calculation of ratio of graft component

(i) Based on the result of the elution test, the mass (without metal component) (W1') of the graft component of the co-crosslinking agent in 100 parts by mass of the crosslinked rubber was calculated according to the following formula. It is noted that the non-eluted component other than the co-crosslinking agent is the crosslinked base rubber or the like.

$$\text{Mass of graft component (W1')} = 100 \times (\text{Wb/Wa})\text{-Wx}$$

[W1': mass (without metal component) of the graft component in 100 parts by mass of the crosslinked rubber, Wa: mass of the crosslinked rubber before the elution treatment, Wb: mass of the crosslinked rubber after the elution treatment, Wx: mass of the component other than the co-crosslinking agent of the non-eluted (extracted) component contained in 100 parts by mass of the crosslinked rubber]

(ii) The mass (W1) of the graft component of the co-crosslinking agent in 100 parts by mass of the crosslinked rubber was calculated according to the following formula.

$$\text{Mass of graft component (W1)} = \text{W1'} \times \{\text{mass of one mole of co-crosslinking agent}/(\text{mass of one mole of co-crosslinking agent} - \text{mass of metal atom in one mole of co-crosslinking agent})\}$$

[W1': mass (without metal component) of the graft component in 100 parts by mass of the crosslinked rubber]

(iii) The ratio of the graft component was calculated according to the following formula.

$$\text{Ratio of graft component} = \text{W1/W0}$$

[W1: mass of the graft component in 100 parts by mass of the crosslinked rubber, W0: amount of the co-crosslinking agent used for forming 100 parts by mass of the crosslinked rubber]

d. Ratio of unreacted component

(i) The mass (W3) of the unreacted component of the co-crosslinking agent in 100 parts by mass of the crosslinked rubber was calculated using the absorption spectrum obtained by the above FT-IR and a calibration curve. It is noted that the calibration curve is prepared by measuring the absorption spectrum of a mixture obtained by kneading the base rubber and a predetermined amount of the co-crosslinking agent.

(ii) The ratio of the unreacted component was calculated according to the following formula.

$$\text{Ratio of unreacted component} = \text{W3/W0}$$

[W3: mass of the unreacted component in 100 parts by mass of the crosslinked rubber, W0: amount of the co-crosslinking agent in the rubber composition used for forming 100 parts by mass of the crosslinked rubber]

e. Ratio of non-graft component

(i) The mass (W2) of the non-graft component of the co-crosslinking agent in 100 parts by mass of the crosslinked rubber was calculated according to the following formula.

$$\text{Mass of non-graft component (W2)} = W0\text{-}W1\text{-}W3$$

[W0: amount of the co-crosslinking agent used for forming 100 parts by mass of the crosslinked rubber, W1: mass of the graft component in 100 parts by mass of the crosslinked rubber, W3: mass of the unreacted component in 100 parts by mass of the crosslinked rubber]

(ii) The ratio of the non-graft component was calculated according to the following formula.

$$\text{Ratio of non-graft component} = W2/W0$$

[W2: mass of the non-graft component in 100 parts by mass of the crosslinked rubber, W0: amount of the co-crosslinking agent in the rubber composition used for forming 100 parts by mass of the crosslinked rubber]

[Production of golf ball]

(1) Production of core

According to the formulations shown in Tables 1 to 3, the rubber compositions were kneaded with a kneading roll, and heat-pressed in upper and lower molds, each having a hemispherical cavity, at a temperature of 170 °C for 30 minutes to produce spherical cores having a diameter of 39.7 mm.

Table 1

| Golf ball No. | | | 1 | 2 | 3 | 4 | 5 | 6 | 7 | 8 | 9 |
|---|---|---|---|---|---|---|---|---|---|---|---|
| Core formulation (parts by mass) | (a) | BR730 | 100 | 100 | 100 | 100 | 100 | 100 | 100 | 85 | 85 |
| | | IR2200 | - | - | - | - | - | - | - | 15 | 15 |
| | (b) | ZN-DA90S | 24 | 27 | 30 | 30 | 30 | 30 | 30 | 26 | 29 |
| | (c) | DCP | 0,8 | 0.8 | 0.8 | 0.5 | 0.6 | 1.2 | 2.0 | 0,8 | 0.8 |
| | | PHC-40 | - | - | - | - | - | - | - | - | - |
| | (d) | H-BHT | - | - | - | - | - | - | - | - | - |
| | (e) | TP2019 | - | - | - | - | - | - | - | - | - |
| | | K125 | - | - | - | - | - | - | - | - | - |
| | (g) | ZnO | 5 | 5 | 5 | 5 | 5 | 5 | 5 | 5 | 5 |
| | | Barium sulfate | 16.1 | 14.9 | 13.5 | 13.5 | 13.5 | 13.5 | 13.5 | 15.5 | 14.0 |
| HF/B | | | - | - | - | - | - | - | - | - | - |
| HF/C | | | - | - | - | - | - | - | - | - | - |

(continued)

| Golf ball No. | | 1 | 2 | 3 | 4 | 5 | 6 | 7 | 8 | 9 |
|---|---|---|---|---|---|---|---|---|---|---|
| Slab properties | Hardness (Shore C) | 74.1 | 77.7 | 82.3 | 77.2 | 78.6 | 83.4 | 82.8 | 74.2 | 80.2 |
| | Effective crosslinking density DC (mmol/cm$^3$) | 1.9 | 1.8 | 2.3 | 1.8 | 1.9 | 3.2 | 4.5 | 1.7 | 1.9 |
| | Tensile elastic modulus TM (MPa) | 1.1 | 1.3 | 1.7 | 1.5 | 1.3 | 1.9 | 1.9 | 1.1 | 1.4 |
| | ln(DC) | 0.64 | 0.59 | 0.83 | 0.59 | 0.64 | 1.16 | 1.50 | 0.53 | 0.64 |
| | TM-3.33*ln(DC) | -1.04 | -0.66 | -1.07 | -0.46 | -0.84 | -1.97 | -3.11 | -0.67 | -0.74 |
| | Ratio of graft component in component (b) | 0.70 | 0.70 | 0.71 | 0.70 | 0.70 | 0.71 | 0.71 | 0.70 | 0.70 |
| | Ratio of non-graft component in component (b) | 0.15 | 0.14 | 0.14 | 0.14 | 0.14 | 0.14 | 0.14 | 0.14 | 0.14 |
| | Ratio of unreacted component in component (b) | 0.16 | 0.16 | 0.16 | 0.16 | 0.16 | 0.16 | 0.15 | 0.16 | 0.16 |
| Core | Compression deformation amount (mm) | 3.8 | 3.3 | 3.1 | 3.3 | 3.2 | 3.0 | 3.0 | 3.6 | 3.2 |
| | Center hardness Ho (Shore C) | 59.2 | 62.9 | 65.5 | 61.0 | 63.3 | 60.2 | 65.8 | 63.1 | 68.7 |
| | Surface hardness Hs (Shore C) | 80.5 | 83.7 | 85.0 | 82.5 | 83.8 | 87.5 | 91.5 | 81.2 | 84.5 |
| | Hardness difference (Hs-Ho) | 21.3 | 20.8 | 19.5 | 21.5 | 20.6 | 27.4 | 25.8 | 18.2 | 15.9 |
| Golf ball | Compression deformation amount (mm) | 3.2 | 2.8 | 2.6 | 2.8 | 2.7 | 2.5 | 2.5 | 3.0 | 2.7 |
| | Durability | 100 | 100 | 100 | 100 | 100 | 98 | 95 | 100 | 100 |

Table 2

| Golf ball No. | | | 10 | 11 | 12 | 13 | 14 | 15 | 16 | 17 | 18 |
|---|---|---|---|---|---|---|---|---|---|---|---|
| Core formulation (parts by mass) | (a) | BR730 | 100 | 100 | 100 | 100 | 100 | 100 | 100 | 100 | 100 |
| | | IR2200 | | | | | | | | | |
| | (b) | ZN-DA90S | 35 | 29 | 33 | 40 | 44 | 40.6 | 44.8 | 40.6 | 44.8 |
| | (c) | DCP | 4.0 | 0.8 | 0.8 | 0.8 | 0.8 | 0.8 | 0.8 | 0,8 | 0.8 |
| | | PHC-40 | | - | | - | | - | | | - |
| | (d) | H-BHT | 5 | 5 | 5 | 10 | 10 | - | - | - | - |
| | (e) | TP2019 | - | - | - | - | - | 10 | 10 | - | |
| | | K125 | - | - | - | - | - | - | | 10 | 10 |
| | (g) | ZnO | 5 | 5 | 5 | 5 | 5 | 5 | 5 | 5 | 5 |
| | | Barium sulfate | 12.8 | 14.8 | 13.2 | 11.5 | 10.0 | 8.3 | 6.7 | 8.3 | 6.7 |
| HF/B | | | 0.15 | 0.18 | 0.16 | 0.26 | 0.24 | - | - | - | - |
| HF/C | | | 1.5 | 7.7 | 7.7 | 15.3 | 15.3 | - | - | - | - |
| Slab properties | Hardness (Shore C) | | 76.5 | 67.0 | 71.2 | 71.1 | 72.8 | 65.1 | 71.0 | 64.3 | 66.5 |
| | Effective crosslinking density DC ($mmol/cm^3$) | | 2.8 | 0.9 | 1.0 | 0.9 | 1.0 | 0.6 | 0.7 | 0.5 | 0.6 |
| | Tensile elastic modulus TM (MPa) | | 2.1 | 0.9 | 1.0 | 1.1 | 1.7 | 1.0 | 1.4 | 1.3 | 1.3 |
| | ln(DC) | | 1.03 | -0.11 | 0.00 | -0.11 | 0.00 | -0.51 | -0.36 | -0.69 | -0.51 |
| | TM-3.33*ln(DC) | | -1.33 | 1.25 | 1.00 | 1.45 | 1.70 | 2.70 | 2.59 | 3.61 | 3.00 |
| | Ratio of graft component in component (b) | | 0.70 | 0.59 | 0.60 | 0.51 | 0.48 | 0.57 | 0.54 | 0.59 | 0.60 |
| | Ratio of non-graft component in component (b) | | 0.14 | 0.19 | 0.19 | 0.21 | 0.24 | 0.07 | 0.10 | 0.05 | 0.05 |
| | Ratio of unreacted component in component (b) | | 0.16 | 0.22 | 0.22 | 0.28 | 0.29 | 0.36 | 0.35 | 0.36 | 0.35 |
| Core | Compression deformation amount (mm) | | 3.2 | 4.2 | 3.7 | 3.5 | 3.2 | 3.4 | 3.1 | 3.4 | 3.1 |
| | Center hardness Ho (Shore C) | | 69.4 | 62.4 | 59.8 | 65.6 | 63.4 | 59.0 | 60.6 | 58.5 | 62.0 |
| | Surface hardness Hs (Shore C) | | 81.9 | 71.1 | 75.4 | 73.4 | 75.8 | 72.0 | 75.5 | 69.0 | 75.0 |
| | Hardness difference (Hs-Ho) | | 12.5 | 8.7 | 15.6 | 7.9 | 12.4 | 13.0 | 14.9 | 10.5 | 13.0 |

(continued)

| Golf ball No. | | 10 | 11 | 12 | 13 | 14 | 15 | 16 | 17 | 18 |
|---|---|---|---|---|---|---|---|---|---|---|
| Golf ball | Compression deformation amount (mm) | 2.7 | 3.5 | 3.1 | 3.0 | 2.8 | 3.0 | 2.9 | 3.0 | 2.9 |
| | Durability | 98 | 105 | 105 | 110 | 110 | 115 | 115 | 115 | 115 |

Table 3

| Golf ball No. | | | 19 | 20 | 21 | 22 | 23 | 24 | 25 | 26 |
|---|---|---|---|---|---|---|---|---|---|---|
| Core formulation (parts by mass) | (a) | BR730 | 100 | 100 | 100 | 100 | 100 | 100 | 85 | 85 |
| | | IR2200 | 0 | 0 | 0 | 0 | 0 | 0 | 15 | 15 |
| | (b) | ZN-DA90S | 35 | 40 | 30 | 30 | 40 | 44 | 26 | 29 |
| | (c) | DCP | 0.8 | 0.8 | 0.1 | 0.2 | - | - | - | - |
| | | PHC-40 | - | - | - | - | 0.14 | 0.14 | 0.78 | 0.78 |
| | (d) | H-BHT | 2 | 4 | - | - | - | - | - | - |
| | (e) | TP2019 | 2 | 4 | - | - | - | - | - | - |
| | | K125 | - | - | - | - | - | - | - | - |
| | (g) | ZnO | 5 | 5 | 5 | 5 | 5 | 5 | 5 | 5 |
| | | Barium sulfate | 12.8 | 8.0 | 13.5 | 13.5 | 9.5 | 8.3 | 15.7 | 14.3 |
| HF/B | | | 0.06 | 0.10 | - | - | - | - | - | - |
| HF/C | | | 3.1 | 6.1 | - | - | - | - | - | - |
| Slab properties | Hardness (Shore C) | | 75.5 | 73.0 | 59.6 | 70.2 | 66.8 | 68.6 | 65.3 | 67.3 |
| | Effective crosslinking density DC (mmol/$cm^3$) | | 1.0 | 1.0 | 0.5 | 0.6 | 0.8 | 0.7 | 1.1 | 1.3 |
| | Tensile elastic modulus TM (MPa) | | 1.0 | 1.3 | 0.5 | 0.6 | 1.0 | 1.4 | 0.6 | 0.9 |
| | ln(DC) | | 0.00 | 0.00 | -0.69 | -0.51 | -0.22 | -0.36 | 0.10 | 0.26 |
| | TM-3.33*ln(DC) | | 1.00 | 1.30 | 2.81 | 2.30 | 1.74 | 2.59 | 0.28 | 0.03 |
| | Ratio of graft component in component (b) | | 0.60 | 0.59 | 0.59 | 0.49 | 0.48 | 0.54 | 0.68 | 0.69 |
| | Ratio of non-graft component in component (b) | | 0.19 | 0.19 | 0.04 | 0.19 | 0.10 | 0.10 | 0.15 | 0.14 |
| | Ratio of unreacted component in component (b) | | 0.22 | 0.22 | 0.37 | 0.32 | 0.42 | 0.35 | 0.17 | 0.17 |

(continued)

| Golf ball No. | | 19 | 20 | 21 | 22 | 23 | 24 | 25 | 26 |
|---|---|---|---|---|---|---|---|---|---|
| Core | Compression deformation amount (mm) | 3.3 | 3.5 | 5.0 | 3.8 | 3.7 | 3.6 | 3.7 | 3.3 |
| | Center hardness Ho (Shore C) | 68.0 | 65.0 | 54.6 | 58.8 | 62.5 | 63.7 | 60.0 | 63.0 |
| | Surface hardness Hs (Shore C) | 80.0 | 74.0 | 60.1 | 72.5 | 68.3 | 69.7 | 77.1 | 79.6 |
| | Hardness difference (Hs-Ho) | 12.0 | 9.0 | 5.6 | 13.7 | 5.8 | 6.1 | 17.2 | 16.6 |
| Golf ball | Compression deformation amount (mm) | 2.7 | 3.0 | 4.5 | 3.3 | 3.2 | 3.1 | 3.2 | 2.9 |
| | Durability | 105 | 105 | 110 | 110 | 115 | 115 | 105 | 105 |

The materials used in Tables 1 to 3 are shown as follows.

BR730: high-cis polybutadiene rubber (cis-1,4 bond amount = 95 mass%, 1,2-vinyl bond amount = 1.3 mass %, Moony viscosity ($ML_{1+4}$ (100°C)) = 55, molecular weight distribution (Mw/Mn) = 3) available from JSR Corporation
IR2200: polyisoprene rubber (cis-1,4 bond amount = 98 mass%, Mooney viscosity ($ML_{1+4}$ (100°C)) = 82) available from JSR Corporation
ZN-DA90S: zinc acrylate (surface treated with zinc stearate in an amount of 10 %) available from Nisshoku Techno Fine Chemical Co., Ltd.
DCP: Percumyl (registered trademark) D (one-minute half-life temperature: 175.2 °C) (the purity of dicumyl peroxide is at least 98%) available from NOF Corporation
PHC-40: Perhexa (registered trademark) C-40 (the purity of 1,1-di (t-butylperoxy) cyclohexane is 40%, the amount described in Tables is the mass of 1,1-di (t-butylperoxy) cyclohexane) available from NOF Corporation
H-BHT: dibutylhydroxy toluene available from Tokyo Zairyo Co., Ltd.
TP2019: Sylvares (registered trademark) TP2019 (pinene-phenol copolymer (softening point: 125 °C)) available from Kraton Corporation
K125: POLYSTER K125 (terpene phenolic resin (softening point: 125±5 °C)) available from Yasuhara Chemical Co., Ltd.
ZnO: zinc oxide available from Indo Lysaght Corporation
Barium sulfate: "Barium sulfate BD" available from Sakai Chemical Industry Co., Ltd.

(2) Production of cover and production of golf ball

The cover material having the formulation shown in Table 4 was extruded with a twin-screw kneading type extruder to prepare the cover composition in a pellet form. The conditions for extruding the cover composition were a screw diameter of 45 mm, a screw rotational speed of 200 rpm, and screw L/D = 35, and the mixture was heated to 160 to 230 °C at the die position of the extruder. The obtained cover composition was injection molded onto the spherical core obtained above such that the formed cover had a thickness of 1.5 mm, to produce golf balls having the spherical core and the cover covering the core. Evaluation results of the obtained golf balls are shown in Tables 1 to 3.

Table 4

| Cover composition | | |
|---|---|---|
| Formulation (parts by mass) | Himilan 1555 | 40 |
| | Himilan 1605 | 20 |
| | Himilan AM7329 | 40 |
| | Titanium dioxide (A220) | 3 |
| | JF-90 | 0.2 |

(continued)

| Cover composition | |
|---|---|
| Slab hardness (Shore D) | 63 |

The materials used in Table 4 are shown as follows.
Himilan (registered trademark) 1555: Na neutralized ionomer available from Du Pont-Mitsui Polychemicals Co., Ltd.
Himilan 1605: Na neutralized ionomer available from Du Pont-Mitsui Polychemicals Co., Ltd.
Himilan AM7329: Zn neutralized ionomer available from Du Pont-Mitsui Polychemicals Co., Ltd.
A-220: titanium dioxide available from Ishihara Sangyo Kaisha, Ltd.
JF-90: light stabilizer available from Johoku Chemical Co., Ltd.

The golf balls No. 11 to 26 are the case where the core is formed from a cured product of a golf ball rubber composition containing (a) a base rubber, (b) an α,β-unsaturated carboxylic acid having 3 to 8 carbon atoms and/or a metal salt thereof as a co-crosslinking agent, and (c) a crosslinking initiator, wherein a tensile elastic modulus TM (MPa) of the cured product of the golf ball rubber composition and an effective crosslinking density DC (mmol/$cm^3$) of the cured product of the golf ball rubber composition satisfy a relation of the mathematical formula (1). These golf balls have excellent durability.

This application is based on Japanese Patent application No. 2019-126080 filed on July 5, 2019 and Japanese Patent application No. 2019-218897 filed on December 3, 2019, the contents of which are hereby incorporated by reference.

## Claims

1. A golf ball having a constituent member, wherein at least a part of the constituent member is formed from a cured product of a golf ball rubber composition, the golf ball rubber composition contains (a) a base rubber, (b) an α,β-unsaturated carboxylic acid having 3 to 8 carbon atoms and/or a metal salt thereof as a co-crosslinking agent, and (c) a crosslinking initiator, and an effective crosslinking density DC (mmol/$cm^3$) of the cured product of the golf ball rubber composition and a tensile elastic modulus TM (MPa) between 0.05% strain and 0.25% strain of the cured product of the golf ball rubber composition satisfy a relation of the mathematical formula (1):

$$TM-3.33\times\ln(DC)>(-0.10)\cdots\ (1).$$

2. The golf ball according to claim 1, wherein the effective crosslinking density DC (mmol/$cm^3$) of the cured product of the golf ball rubber composition and the tensile elastic modulus TM (MPa) between 0.05% strain and 0.25% strain of the cured product of the golf ball rubber composition satisfy a relation of the mathematical formula (2):

$$TM-3.33\times\ln(DC)>0.30\cdots\ (2).$$

3. The golf ball according to claim 1 or 2, wherein the golf ball rubber composition contains (d) a radical scavenger.

4. The golf ball according to claim 3, wherein the golf ball rubber composition contains (d) the radical scavenger in an amount ranging from 2 parts by mass to 15 parts by mass with respect to 100 parts by mass of (a) the base rubber.

5. The golf ball according to claim 3 or 4, wherein (d) the radical scavenger includes a hindered phenol-based compound or a hindered amine-based compound.

6. The golf ball according to any one of claims 1 to 5, wherein the golf ball rubber composition contains (e) a terpene-based resin.

7. The golf ball according to claim 6, wherein the golf ball rubber composition contains (e) the terpene-based resin in an amount ranging from 2 parts by mass to 20 parts by mass with respect to 100 parts by mass of (a) the base rubber.

8. The golf ball according to claim 6 or 7, wherein (e) the terpene-based resin is at least one member selected from the group consisting of a terpene polymer, a terpene-phenol copolymer, a terpene-styrene copolymer, a terpene-phenol-styrene copolymer, a hydrogenated terpene-phenol copolymer, a hydrogenated terpene-styrene copolymer, and a hydrogenated terpene-phenol-styrene copolymer.

**9.** The golf ball according to any one of claims 6 to 8, wherein (e) the terpene-based resin is a compound having at least one structure selected from the group consisting of structures represented by formulae (7) to (10).

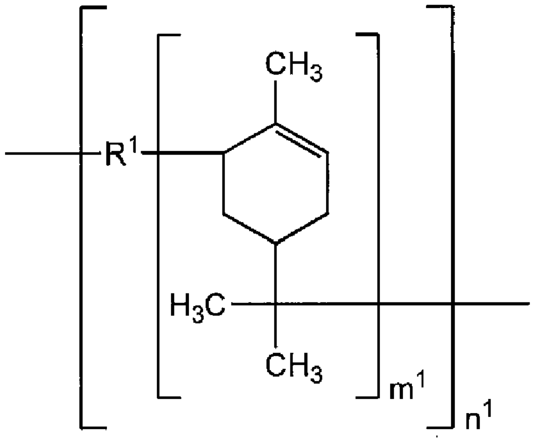

(7)

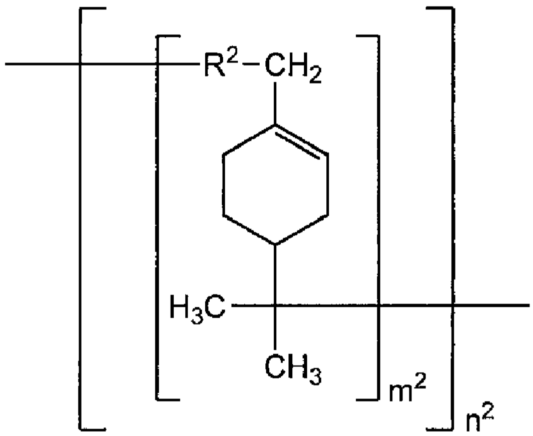

(8)

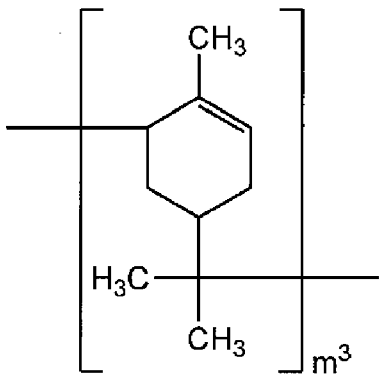

(9)

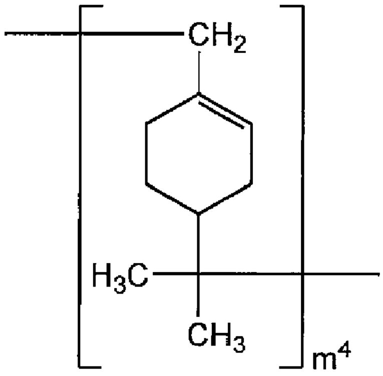

(10)

in the formulae (7) to (10), $R^1$ and $R^2$ each independently represent a divalent residue of a phenol-based compound and/or a styrene-based compound, $m^1$ to $m^4$ each independently represent a natural number of 1 to 30, and $n^1$ and $n^2$ each independently represent a natural number of 1 to 20.

**10.** The golf ball according to any one of claims 6 to 9, wherein (e) the terpene-based resin has a softening point of from 60 °C to 150 °C.

**11.** The golf ball according to claim 1 to 10, wherein the golf ball rubber composition contains (c) the crosslinking initiator in an amount of 0.2 part by mass or less with respect to 100 parts by mass of (a) the base rubber.

**12.** The golf ball according to claim 11, wherein (c) the crosslinking initiator has a one-minute half-life temperature ranging from 130°C to 170°C.

**13.** A rubber composition containing (a) a base rubber, (b) an α,β-unsaturated carboxylic acid having 3 to 8 carbon atoms and/or a metal salt thereof as a co-crosslinking agent, and (c) a crosslinking initiator, and wherein an effective crosslinking density DC (mmol/$cm^3$) of the cured rubber composition and a tensile elastic modulus TM (MPa) between 0.05% strain and 0.25% strain of the cured product of the rubber composition satisfy a relation of the mathematical formula (1):

$$TM-3.33\times\ln(DC)>(-0.10)\cdots\ (1).$$

**14.** A rubber composition in accordance with claim 13, wherein the rubber composition contains (d) a radical scavenger, in particular
wherein the rubber composition contains (d) the radical scavenger in an amount ranging from 2 parts by mass to 15 parts by mass with respect to 100 parts by mass of (a) the base rubber; and/or
wherein (d) the radical scavenger includes a hindered phenol-based compound or a hindered amine-based compound.

**15.** A rubber composition in accordance with claim 13 or claim 14,
wherein the composition contains (c) the crosslinking initiator in an amount of 0.2 part by mass or less with respect to 100 parts by mass of (a) the base rubber, in particular wherein (c) the crosslinking initiator has a one-minute half-life temperature ranging from 130°C to 170°C; and/or
wherein the golf ball rubber composition contains (e) a terpene-based resin, in particular
wherein the rubber composition contains (e) the terpene-based resin in an amount ranging from 2 parts by mass to 20 parts by mass with respect to 100 parts by mass of (a) the base rubber; and/or
wherein (e) the terpene-based resin is at least one member selected from the group consisting of a terpene polymer, a terpene-phenol copolymer, a terpene-styrene copolymer, a terpene-phenol-styrene copolymer, a hydrogenated terpene-phenol copolymer, a hydrogenated terpene-styrene copolymer, and a hydrogenated terpene-phenol-styrene copolymer; and/or
wherein (e) the terpene-based resin is a compound having at least one structure selected from the group consisting of structures represented by formulae (7) to (10).

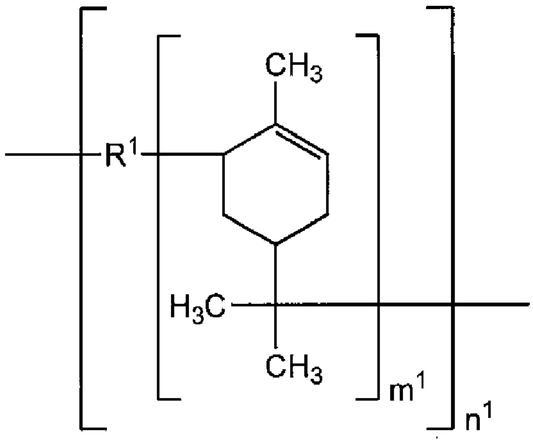

(7)

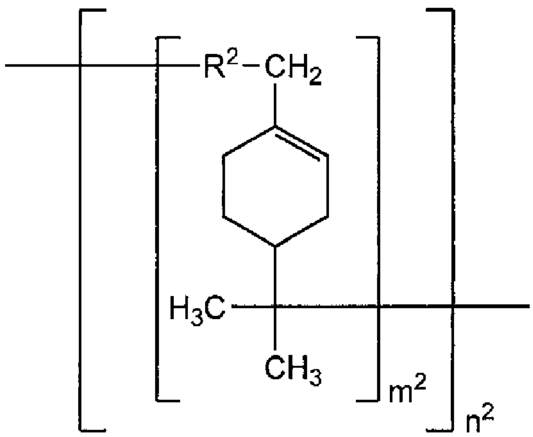

(8)

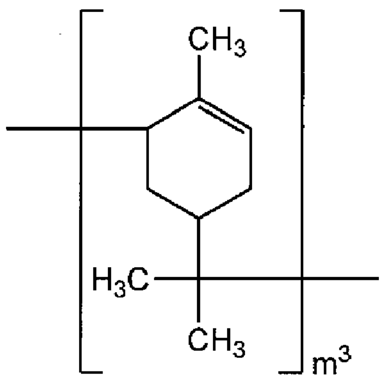

(9)

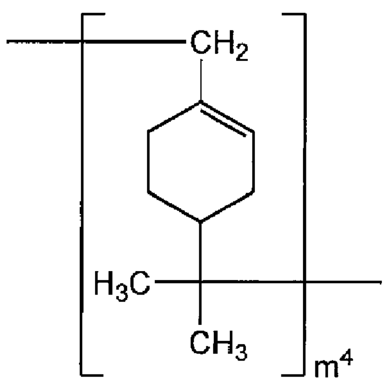

(10)

in the formulae (7) to (10), $R^1$ and $R^2$ each independently represent a divalent residue of a phenol-based compound

and/or a styrene-based compound, $m^1$ to $m^4$ each independently represent a natural number of 1 to 30, and $n^1$ and $n^2$ each independently represent a natural number of 1 to 20; and/or
wherein (e) the terpene-based resin has a softening point of from 60 °C to 150 °C.

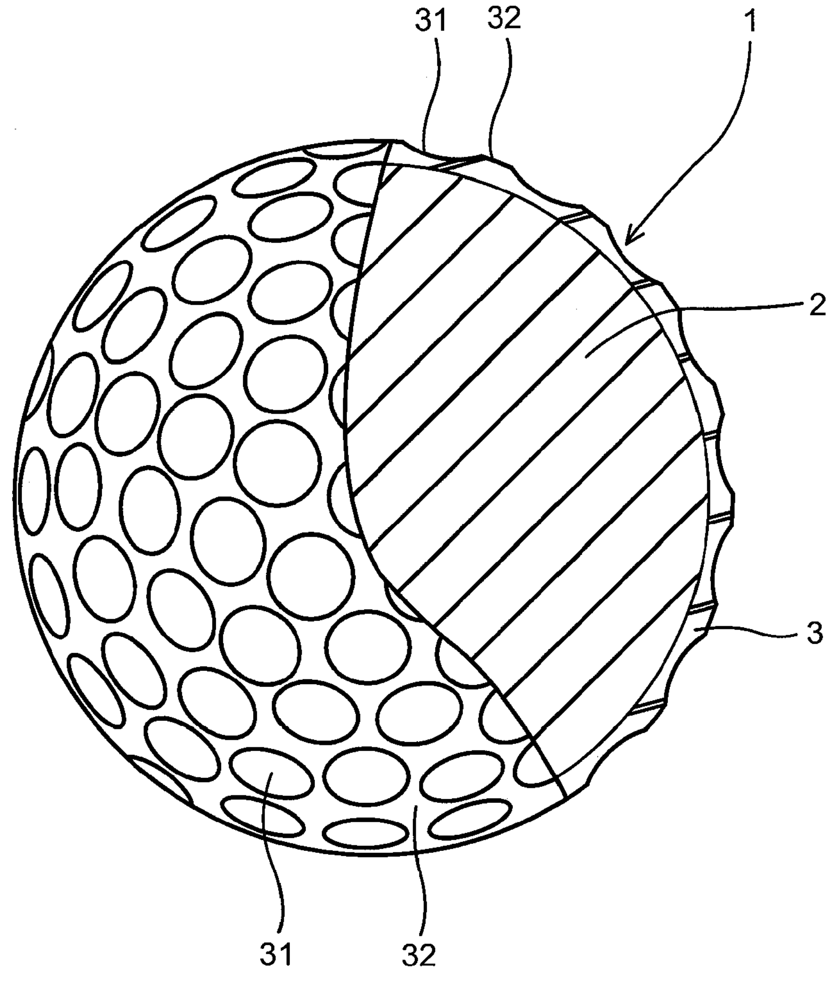


Fig. 1

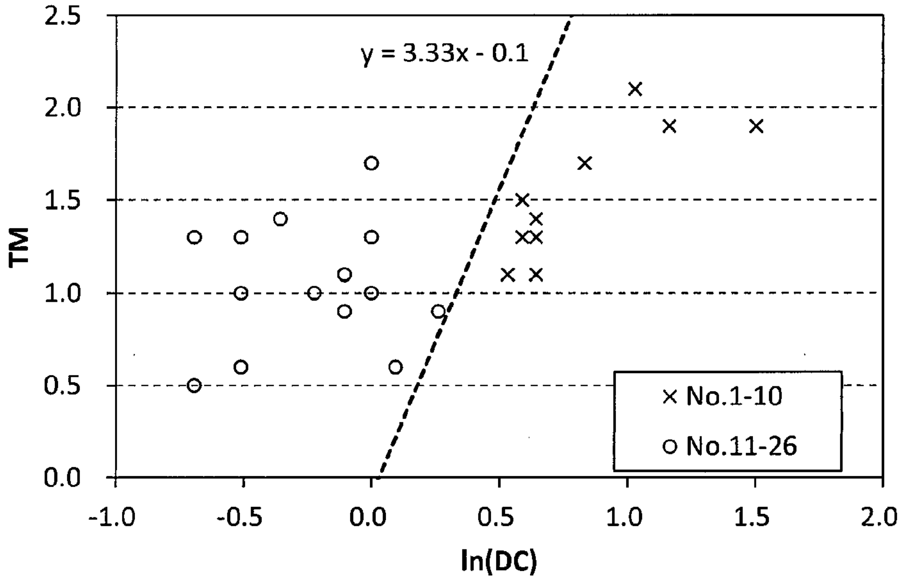
y = 3.33x - 0.1
TM
2.5
2.0
1.5
1.0
0.5
0.0
-1.0
-0.5
0.0
0.5
1.0
1.5
2.0
ln(DC)
× No.1-10
○ No.11-26

Fig. 2

Europäisches Patentamt
European Patent Office
Office européen des brevets

# EUROPEAN SEARCH REPORT

Application Number
EP 20 18 1533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br>Y | US 2015/065268 A1 (BRIDGESTONE SPORTS CO LTD) 5 March 2015 (2015-03-05)<br>* claims; examples *<br>----- | 1,2,13<br>3-5,14 | INV.<br>A63B37/00<br>C08K5/09<br>C08K5/098<br>C08K5/14<br>C08L9/00 |
| Y | US 2006/073913 A1 (CASTNER ERIC S [US]) 6 April 2006 (2006-04-06)<br>* paragraph [0037]; claims; examples *<br>----- | 3-5,14 | |
| A | US 2018/318657 A1 (MADSON MICHAEL R [US] ET AL) 8 November 2018 (2018-11-08)<br>* claims *<br>----- | 1-15 | |
| A | US 6 575 850 B1 (IWAMI SATOSHI [JP] ET AL) 10 June 2003 (2003-06-10)<br>* column 2, lines 30-40; claim 5 *<br>----- | 1-15 | |

TECHNICAL FIELDS SEARCHED (IPC)

A63B
C08K
C09J
C08L

The present search report has been drawn up for all claims

1

| Place of search | Date of completion of the search | Examiner |
|---|---|---|
| Munich | 8 October 2020 | Masson, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 20 18 1533

This annex lists the patent family members relating to the patent documents cited in the above-mentioned European search report. The members are as contained in the European Patent Office EDP file on
The European Patent Office is in no way liable for these particulars which are merely given for the purpose of information.

08-10-2020

| Patent document cited in search report | Publication date | Patent family member(s) | Publication date |
|---|---|---|---|
| US 2015065268 A1 | 05-03-2015 | JP 6379860 B2 | 29-08-2018 |
| | | JP 6536721 B2 | 03-07-2019 |
| | | JP 2015047502 A | 16-03-2015 |
| | | JP 2018149387 A | 27-09-2018 |
| | | US 2015065268 A1 | 05-03-2015 |
| | | US 2016074710 A1 | 17-03-2016 |
| | | US 2017282016 A1 | 05-10-2017 |
| US 2006073913 A1 | 06-04-2006 | NONE | |
| US 2018318657 A1 | 08-11-2018 | CN 207654635 U | 27-07-2018 |
| | | US 2017291077 A1 | 12-10-2017 |
| | | US 2018318657 A1 | 08-11-2018 |
| US 6575850 B1 | 10-06-2003 | JP 4424817 B2 | 03-03-2010 |
| | | JP 2001137386 A | 22-05-2001 |
| | | US 6575850 B1 | 10-06-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015077405 A
- JP 2015047502 A
- JP 2019126080 A
- JP 2019218897 A